# EUROPEAN PATENT APPLICATION

(11) **EP 4 207 134 A1**
(43) Date of publication of application: **05.07.2023**
(21) Application number: 21868562.6
(22) Date of filing: 10.09.2021
(51) Int. Cl.: G08G 1/14

(54) **PARKING CONTROL METHOD AND RELATED DEVICE**

(30) Priority: 19.09.2020 CN 202010990863
(71) Applicant: Huawei Technologies Co., Ltd., Shenzhen, Guangdong 518129 (CN)
(72) Inventor: CHEN, Shenghui, Shenzhen, Guangdong 518129 (CN); SHI, Yuepeng, Shenzhen, Guangdong 518129 (CN)
(74) Representative: Körber, Martin Hans
(86) International application number: PCT/CN2021/117645
(87) International publication number: WO 2022/057737

(57) **Abstract**

Embodiments of this application provide a parking control method and a related device applied to a self-driving vehicle system. The parking control method includes: planning a traveling track of a first vehicle in a target region based on a first location of the first vehicle and a second location of a first parking space, where the first location is a current location of the first vehicle; detecting whether there is a second vehicle whose distance from the traveling track is less than a first preset distance in the target region; if there is a second vehicle whose distance from the traveling track is less than the first preset distance in the target region, controlling the second vehicle to travel from a current location to a third location, where a distance between the third location and the traveling track is greater than the first preset distance; and controlling the first vehicle to travel to the first parking space based on the traveling track. In implementation of embodiments of this application, a problem of parking difficulty can be greatly alleviated.

## Description

This application claims priority to Chinese Patent Application No. 202010990863.3, filed with the China National Intellectual Property Administration on September 19, 2020 and entitled "PARKING CONTROL METHOD AND RELATED DEVICE", which is incorporated herein by reference in its entirety.

### TECHNICAL FIELD

This application relates to the field of self-driving vehicles, and in particular, to a parking control method and a related device.

### BACKGROUND

With development of internet of things technologies and artificial intelligence technologies, the automobile industry undergoes significant changes. Self-driving vehicles are gradually put into commercial use, and smart parking lots gradually emerge to meet requirements of the self-driving vehicles. Generally, the smart parking lot can schedule and manage self-driving vehicles in a region in a unified manner. In addition, a problem of parking difficulty and parking in a disordered manner of the self-driving vehicles in the future can be effectively resolved with reference to a virtual parking space technology. However, currently, a delimited virtual parking space is usually fixed and cannot be dynamically changed based on a vehicle model size, a region, and a travel-out time. Therefore, utilization of the parking lot is not significantly improved.

Therefore, how to implement real-time dynamic scheduling of the self-driving vehicle and improve utilization of the parking lot is a problem that needs to be urgently resolved.

### SUMMARY

Embodiments of this application provide a parking control method and a related device, to effectively alleviate a problem of parking difficulty and parking in a disordered manner of a self-driving vehicle.

According to a first aspect, an embodiment of this application provides a parking control method. The method is applied to a self-driving vehicle system. The method includes:
planning a traveling track of a first vehicle in a target region based on a first location of the first vehicle and a second location of a first parking space, where the first location is a current location of the first vehicle;
detecting whether there is a second vehicle whose distance from the traveling track is less than a first preset distance in the target region;
controlling the second vehicle to travel from a current location to a third location, if there is a second vehicle whose distance from the traveling track is less than the first preset distance in the target region, where a distance between the third location and the traveling track is greater than the first preset distance; and
controlling the first vehicle to travel to the first parking space based on the traveling track.

In implementation of this embodiment of this application, the traveling track of the self-driving vehicle from the current location to the first parking space is first planned, and when the self-driving vehicle travels for parking based on the track, if it is detected that there is a vehicle (the second vehicle), for example, a vehicle that is excessively close to the traveling track, that affects traveling of the self-driving vehicle in a parking lot (the target region), the vehicle may be first controlled to travel to a location that does not affect traveling of the first vehicle, and then the first vehicle is controlled to park in the first parking space. Therefore, in this method of controlling, during parking, another vehicle to move, parking resources can be fully integrated. In this way, during parking, a case in which the self-driving vehicle cannot be parked in the parking space because the self-driving vehicle cannot pass through a narrow space between vehicles due to an excessively large vehicle model is avoided, or a case in which the self-driving vehicle cannot be parked in the target parking space due to an excessively large vehicle model on either side of the parking space is avoided. Therefore, a success rate of parking the self-driving vehicle in the parking space is greatly increased, and a problem of parking difficulty is resolved. In addition, after the parking space in this application is delimited, the parking space is dynamically changed for a plurality of times based on surrounding information (for example, parking space adjustment of another vehicle and a predetermined parking time). In this way, flexibility of using the parking space in the parking lot is improved, real-time dynamic scheduling of the self-driving vehicle is implemented, and utilization of the parking lot is improved.

In a possible implementation, the target region includes a parking region and a non-parking region, the target region does not include a lane, the non-parking region includes an obstacle region and a vehicle traveling region, and the vehicle traveling region is used for vehicle traveling. In this embodiment of this application, in the parking region in the target region, there is only a parking space used for parking, and there is no lane used for vehicle traveling. In addition to the obstacle region, the non-parking region further includes the vehicle traveling region used for vehicle traveling, and there is also no lane in the non-parking region. Therefore, in this embodiment of this application, the parking space can be tiled, and the lane can be canceled, to use a space in the parking lot as much as possible and save a resource occupied by the lane, so that more vehicles can be parked in a specific parking region, to greatly improve space utilization.

In a possible implementation, after the detecting whether there is a second vehicle whose distance from the traveling track is less than a first preset distance in the target region, the method further includes: controlling the first vehicle to travel to the first parking space based on the traveling track, if there is no second vehicle whose distance from the traveling track is less than the first preset distance in the target region. In this embodiment of this application, if it is detected that there is no vehicle that affects traveling of the first vehicle, the first vehicle may be directly controlled to travel to the first parking space based on the traveling track without a need to feature another vehicle.

In a possible implementation, the method further includes: planning the first parking space in the target region based on a preset parking policy and parking information corresponding to the first vehicle, to obtain parking space information of the first parking space, where the parking space information includes the second location, and the parking information includes the first location. In this embodiment of this application, the parking space of the self-driving vehicle is not pre-delimited, but is dynamically changed based on the preset parking policy and vehicle model information. Therefore, limitations imposed by a fixed size and a fixed orientation of an existing parking space can be removed, to improve utilization of the parking lot, and different parking requirements of different self-driving vehicles can be met as much as possible.

In a possible implementation, the parking information includes a first duration of the first vehicle, and the first duration is an estimated parking duration of the first vehicle in the target region; and the preset parking policy includes that a longer first duration indicates a longer distance between the second location and an exit in the target region. In this embodiment of this application, a self-driving vehicle with a longer parking time is farther away from the exit in the target region, and similarly, a self-driving vehicle with a shorter parking time is closer to the exit in the target region, so that a vehicle with a shorter parking time can quickly travel out of the parking lot.

In a possible implementation, the parking information includes the first duration, and the method further includes: after it is detected that the first vehicle stays in the target region for a second duration, controlling the first vehicle to travel to a second parking space closer to the exit, where the second duration is less than the first duration. In this embodiment of this application, the parking space of the first vehicle is not fixed, and the parking space may be dynamically changed based on a parking time. For example, as a travel-out time of the self-driving vehicle in the parking space in the target region is about to arrive, a location of the parking space is adjusted based on a predetermined parking time, and the parking space of the self-driving vehicle is arranged to the second parking space closer to the exit based on the predetermined parking time, so that the self-driving vehicle quickly travels out. Therefore, in this embodiment of this application, a location of the self-driving vehicle may be dynamically adjusted during a parking period of the self-driving vehicle. As the travel-out time increasingly approaches, the location of the self-driving vehicle is closer to the exit, so that the vehicle can quickly travel out.

In a possible implementation, the parking information includes vehicle model information of the first vehicle; and the preset parking policy includes that a larger vehicle model of the first vehicle indicates a larger region corresponding to the first parking space in the target region. In this embodiment of this application, parking spaces of different sizes are allocated to self-driving vehicles of different vehicle models. Therefore, adaptation to changes of various vehicle sizes can be implemented, and the size of the parking space is not fixed, so that a parking space with a minimum size corresponding to a vehicle model is allocated, to effectively improve parking utilization of a limited space.

In a possible implementation, the method further includes: receiving a first parking request sent by a first terminal, where the first parking request includes the vehicle model information; and responding to the first parking request, and sending a parking allowed indication to the first terminal when it is detected that a size of a parking region in the target region is greater than a parking size corresponding to the vehicle model information, where the parking allowed indication includes region information of the target region, and the region information includes at least one of the following information: location information of the target region, information about at least one entrance in the target region, and information about at least one exit in the target region; and before the planning the first parking space in the target region based on a preset parking policy and parking information corresponding to the first vehicle, the method further includes: receiving the parking information sent by the first terminal. In this embodiment of this application, a parking control apparatus may receive the parking request from the first terminal, and when determining that the size of the parking region in the parking lot is greater than the parking size corresponding to the vehicle model information, that is, when the first vehicle can be parked, respond to the request, and return information about the parking lot to the first terminal. It is convenient to reserve a parking space in the parking lot by using a terminal, and user experience is improved.

In a possible implementation, the method further includes: receiving a pickup request sent by a first terminal, where the pickup request includes a first exit identifier, the first exit identifier is used to identify a first exit, and the first exit is an exit from which the first vehicle travels out of the target region; and responding to the pickup request, and controlling the first vehicle to travel to an exit parking space, where a distance between the exit parking space and the first exit is less than a second preset distance. In this embodiment of this application, when a user wants to pick up a vehicle, the user may send a pickup request to the parking lot, so that the self-driving vehicle can travel in advance to a parking space near the exit to wait for the user to pick up the vehicle. In this way, a time for the user to find the vehicle is greatly shortened, and a problem that it is difficult for the user to find the vehicle is resolved.

In a possible implementation, the method further includes: receiving a second parking request sent by a first terminal, where the second parking request includes a second parking duration; responding to the second parking request, and planning a third parking space in the target region based on the second parking duration and a preset parking policy, to obtain parking space information of the third parking space; and controlling the first vehicle to travel to the third parking space. In this embodiment of this application, when a travel-out time of the self-driving vehicle in the parking lot is about to arrive, or when a user wants to modify a parking time of the vehicle, the second parking request sent by the first terminal may be received, to prolong the parking time and improve parking experience of the user.

According to a second aspect, an embodiment of this application provides a parking control apparatus. The apparatus is applied to a self-driving vehicle system. The apparatus includes:
a track unit, configured to plan a traveling track of a first vehicle in a target region based on a first location of the first vehicle and a second location of a first parking space, where the first location is a current location of the first vehicle;
a detection unit, configured to detect whether there is a second vehicle whose distance from the traveling track is less than a first preset distance in the target region;
a first control unit, configured to: control the second vehicle to travel from a current location to a third location, if there is a second vehicle whose distance from the traveling track is less than the first preset distance in the target region, where a distance between the third location and the traveling track is greater than the first preset distance; and
a second control unit, configured to control the first vehicle to travel to the first parking space based on the traveling track.

In a possible implementation, the target region includes a parking region and a non-parking region, the target region does not include a lane, the non-parking region includes an obstacle region and a vehicle traveling region, and the vehicle traveling region is used for vehicle traveling.

In a possible implementation, the first control unit is further configured to: control the first vehicle to travel to the first parking space based on the traveling track, if there is no second vehicle whose distance from the traveling track is less than the first preset distance in the target region.

In a possible implementation, the apparatus further includes a parking space unit, configured to plan the first parking space in the target region based on a preset parking policy and parking information corresponding to the first vehicle, to obtain parking space information of the first parking space, where the parking space information includes the second location, and the parking information includes the first location.

In a possible implementation, the parking information includes a first duration of the first vehicle, and the first duration is an estimated parking duration of the first vehicle in the target region; and the preset parking policy includes that a longer first duration indicates a longer distance between the second location and an exit in the target region.

In a possible implementation, the parking information includes the first duration, and the apparatus further includes a third control unit, configured to: after it is detected that the first vehicle stays in the target region for a second duration, control the first vehicle to travel to a second parking space closer to the exit, where the second duration is less than the first duration.

In a possible implementation, the parking information includes vehicle model information of the first vehicle; and the preset parking policy includes that a larger vehicle model of the first vehicle indicates a larger region corresponding to the first parking space in the target region.

In a possible implementation, the apparatus further includes: a first receiving unit, configured to receive a first parking request sent by a first terminal, where the first parking request includes the vehicle model information; a first response unit, configured to: respond to the first parking request, and send a parking allowed indication to the first terminal when it is detected that a size of a parking region in the target region is greater than a parking size corresponding to the vehicle model information, where the parking allowed indication includes region information of the target region, and the region information includes at least one of the following information: location information of the target region, information about at least one entrance in the target region, and information about at least one exit in the target region; and a second receiving unit, configured to: before the first parking space is planned in the target region based on the preset parking policy and the parking information corresponding to the first vehicle, receive the parking information sent by the first terminal.

In a possible implementation, the apparatus further includes: a third receiving unit, configured to receive a pickup request sent by a first terminal, where the pickup request includes a first exit identifier, the first exit identifier is used to identify a first exit, and the first exit is an exit from which the first vehicle travels out of the target region; and a second response unit, configured to: respond to the pickup request, and control the first vehicle to travel to an exit parking space, where a distance between the exit parking space and the first exit is less than a second preset distance.

In a possible implementation, the apparatus further includes: a fourth receiving unit, configured to receive a second parking request sent by a first terminal, where the second parking request includes a second parking duration; a third response unit, configured to: respond to the second parking request, and plan a third parking space in the target region based on the second parking duration and a preset parking policy, to obtain parking space information of the third parking space; and a fourth control unit, configured to control the first vehicle to travel to the third parking space.

According to a third aspect, an embodiment of this application provides a server. The server is applied to a self-driving vehicle system, and includes a memory and a processor coupled to the memory. The memory is configured to store instructions. The processor is configured to execute the instructions, and the processor performs the method described in any one of the first aspect or the possible implementations of the first aspect.

According to a fourth aspect, an embodiment of this application provides a computer storage medium, configured to store computer software instructions to be used by the parking control apparatus provided in the second aspect. The computer software instructions include a program used to perform the parking control method in the first aspect.

According to a fifth aspect, an embodiment of this application provides a computer program. The computer program includes instructions. When the computer program is executed by a computer, the computer is enabled to perform the procedure performed by the parking control apparatus in the second aspect.

According to a sixth aspect, this application provides a chip system. The chip system includes a processor, configured to support a terminal device in implementing a function in the first aspect, for example, generating or processing information in the parking control method. In a possible design, the chip system further includes a memory, and the memory is configured to store program instructions and data that are necessary for a data sending device. The chip system may include a chip, or may include a chip and another discrete component.

### BRIEF DESCRIPTION OF DRAWINGS

To describe the technical solutions in embodiments of this application or in the background more clearly, the accompanying drawings that need to be used in embodiments of this application or the background are described below.
FIG. 1 is a schematic diagram of an existing parking procedure according to an embodiment of this application;
FIG. 2 is a schematic diagram of parking after the existing parking procedure shown in FIG. 1 according to an embodiment of this application;
FIG. 3 is a schematic diagram of parking planning according to an embodiment of this application;
FIG. 4 is a schematic diagram of a parking procedure based on the parking planning shown in FIG. 3 according to an embodiment of this application;
FIG. 5A is a schematic diagram of a parking control system architecture according to an embodiment of this application;
FIG. 5B is a schematic diagram of a software architecture of a parking control system according to an embodiment of this application;
FIG. 6 is a functional block diagram of an intelligent vehicle 002 according to an embodiment of this application;
FIG. 7 is a schematic diagram of a structure of a vehicle traveling control apparatus according to an embodiment of this application;
FIG. 8A and FIG. 8B are a schematic flowchart of a parking control method according to an embodiment of this application;
FIG. 9 is a two-dimensional parking lot plan view according to an embodiment of this application;
FIG. 10 is a schematic diagram of a procedure of reserving/canceling a virtual parking space from a parking lot when a self-driving vehicle does not arrive at the parking lot according to an embodiment of this application;
FIG. 11A is a schematic diagram of a parking lot for planning a traveling track according to an embodiment of this application;
FIG. 11B is a schematic diagram of a parking procedure existing after a self-driving vehicle arrives at a parking lot according to an embodiment of this application;
FIG. 11C is a schematic diagram of parking a first vehicle according to an embodiment of this application;
FIG. 12 is a schematic diagram of an adjustment process existing when a predetermined parking time of a self-driving vehicle approaches according to an embodiment of this application;
FIG. 13 is a schematic flowchart of modifying a predetermined parking time of a self-driving vehicle according to an embodiment of this application;
FIG. 14 is a schematic diagram of a structure of a parking control apparatus according to an embodiment of this application; and
FIG. 15 is a schematic diagram of a structure of another parking control apparatus according to an embodiment of this application.

### DESCRIPTION OF EMBODIMENTS

Embodiments of this application are described below with reference to the accompanying drawings in embodiments of this application.

In this specification, claims, and accompanying drawings of this application, the terms "first", "second", "third", "fourth", and the like are used to distinguish between different objects, and are not used to describe a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" in this specification means that a specific feature, structure, or characteristic described with reference to the embodiment may be included in at least one embodiment of this application. The phrase appearing at various locations in this specification does not necessarily refer to a same embodiment, and is not an independent or optional embodiment exclusive from another embodiment. It is explicitly and implicitly understood by persons skilled in the art that embodiments described in this specification may be combined with another embodiment.

The terms "component", "module", "system", and the like used in this specification are used to represent computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. For example, the components may communicate by using a local and/or remote process based on a signal having one or more data packets (for example, data from two components interacting with another component in a local system, a distributed system, and/or a network such as the Internet that interacts with another system by using a signal).

To facilitate understanding of embodiments of this application, a technical problem that needs to be resolved in embodiments of this application is first analyzed below in detail. With an increasing quantity of vehicles in China and an excessively huge gap in parking spaces in China, parking difficulty and parking in a disordered manner has become a problem in people's daily traveling. Therefore, increasingly more people start to think about how to quickly plan more parking spaces in a limited space. For example, to resolve the problem of parking difficulty and parking in a disordered manner, the following manners may be used in some commonly used parking solutions:

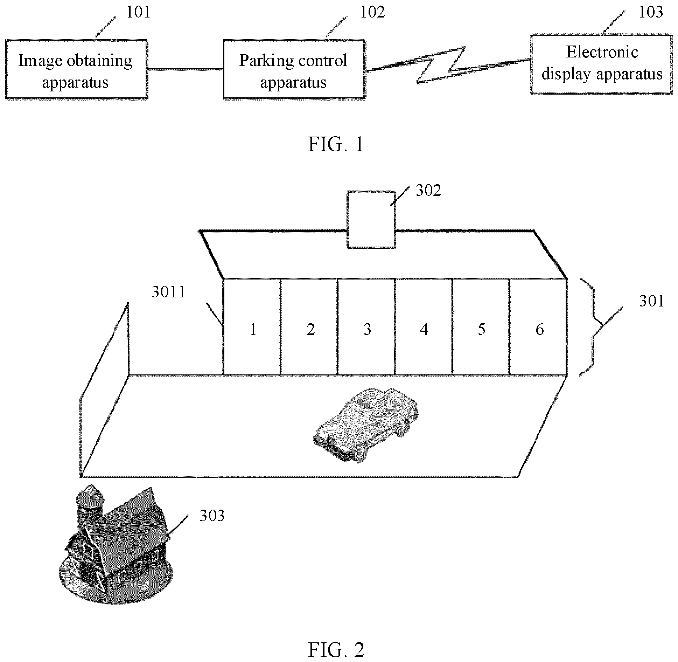

Conventional technology 1: FIG. 1 is a schematic diagram of an existing parking procedure according to an embodiment of this application. As shown in FIG. 1, an image obtaining apparatus is configured to obtain, in real time, a first image picture of a vehicle that enters a preset ground region; a parking control apparatus is configured to: plan and set a virtual parking space for the preset ground region, receive the first image picture sent by the image obtaining apparatus, and superimpose the virtual parking space on the first image picture to form a second image picture; and an electronic display apparatus is configured to: receive the second image picture sent by the parking control apparatus, and display the second image picture, so that a user completes a parking operation in the virtual parking space based on the second image picture. FIG. 2 is a schematic diagram of parking after the existing parking procedure shown in FIG. 1 according to an embodiment of this application. As shown in FIG. 2, a plurality of virtual parking spaces are delimited in a parking region, and are used by vehicles to be parked in the parking region. There is no need to perform construction operations such as marking a parking marking on the ground, a parking lot is quickly constructed, and there are low maintenance costs. In addition, parked vehicles can be conveniently managed in a unified manner, and parking personnel can conveniently and easily complete parking.

Disadvantages: (1) A fixed virtual parking space is delimited on the first image picture, to compare to an existing parking lot. When a parking requirement is received from a vehicle, an appropriate virtual parking space is allocated to the vehicle. The virtual parking space is fixed and cannot adapt to a change of a vehicle model size.

(2) When a virtual parking space is delimited, there are entrance and exit lanes, and utilization of a region in the parking lot is low.

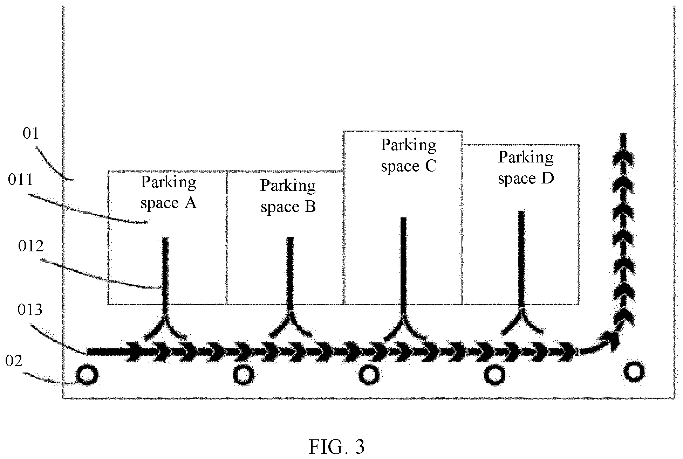

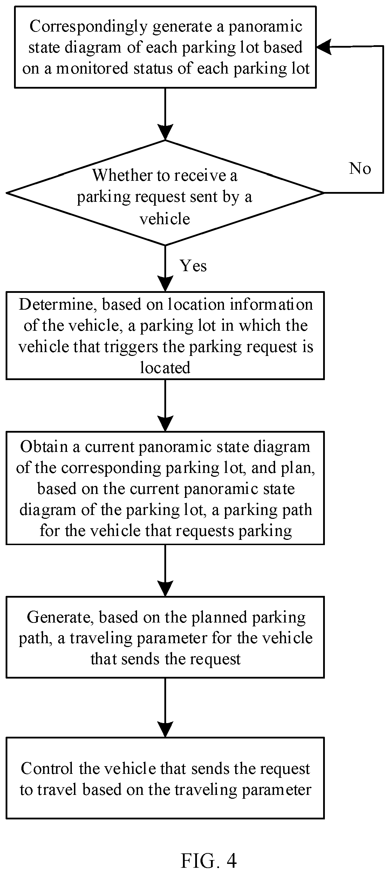

Conventional technology 2: FIG. 3 is a schematic diagram of parking planning according to an embodiment of this application. As shown in FIG. 3, a panoramic state diagram of a parking lot includes a plurality of delimited parking spaces which are applicable to a relatively large quantity of vehicle models. There is a vehicle traveling lane before the plurality of parking spaces, and the lane is used for a vehicle to be parked in a target parking space. FIG. 4 is a schematic diagram of a parking procedure based on the parking planning shown in FIG. 3 according to an embodiment of this application. As shown in FIG. 4, a panoramic state diagram of each parking lot is correspondingly generated based on a monitored status of each parking lot; it is determined whether a parking request sent by a vehicle is received; if a parking request sent by a vehicle is received, a parking lot in which the vehicle that triggers the parking request is located is determined based on location information of the vehicle; a current panoramic state diagram of the corresponding parking lot is obtained, and a parking path is planned, based on the current panoramic state diagram of the parking lot, for the vehicle that requests parking; a traveling parameter is generated, based on the planned parking path, for the vehicle that sends the request; and the vehicle that sends the request travels based on the traveling parameter. That is, in this solution, after a first parking request sent by a vehicle is received, a parking lot in which the vehicle that sends the first parking request is located is determined based on location information of the vehicle; and a parking path is planned and a traveling parameter is generated, based on a current panoramic state diagram of the parking lot, for the vehicle that requests parking, and then the planned parking path and the traveling parameter are sent to the vehicle that requests parking, so that the vehicle automatically travels in the parking lot based on the parking path and the traveling parameter, to arrive at a target parking space. In this solution, automatic parking in a plurality of parking lots can be centrally managed, to effectively reduce costs of automatic parking.

Disadvantages: (1) There is a fixed lane line, and a standard parking space cannot be delimited with a change of a vehicle model. This is not conducive to improving utilization of a limited space.

(2) Paint is used to spray the parking space, and consequently it is difficult to modify the parking space.

(3) It is difficult to quickly plan a parking lot applicable to a plurality of vehicle models in an empty region.

With the development of economy, people have diversified requirements for vehicle model sizes, and consequently it is difficult for parking lots to cope with the changing parking requirements. During peak hours of commuting or traveling, requirements for parking spaces in some specific regions increase sharply in a specific period. In the absence of management, vehicles are parked in a surrounding empty region in a disordered manner, and consequently many social problems are caused. Therefore, embodiments of this application provide a parking control method, so that an existing vehicle in a parking lot can be scheduled at any time for a self-driving vehicle. A virtual parking space in a system is not pre-delimited, but is dynamically changed based on a vehicle model provided when a parking space is reserved, and is free from constraints such as an existing size and an existing orientation. In addition, there may be cooperation with a parking planning system in the parking lot to cancel entrance and exit lane lines and tile a vehicle in the parking lot, to maximize utilization of a region.

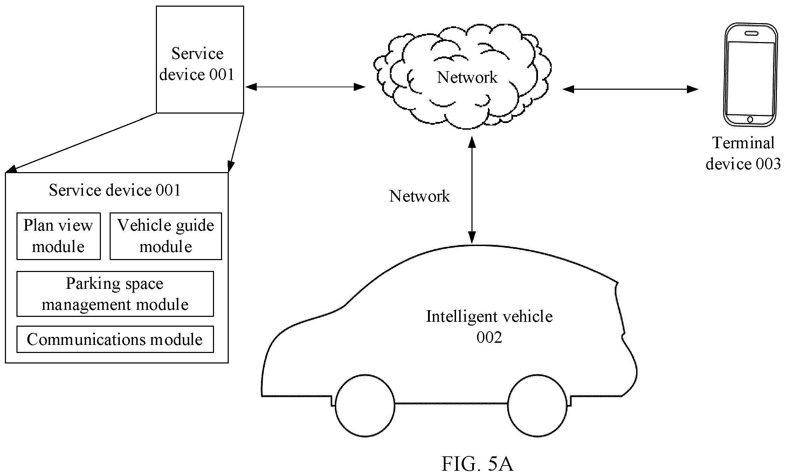

To facilitate understanding of embodiments of this application, a parking control system architecture on which embodiments of this application are based is first described below. FIG. 5A is a schematic diagram of a parking control system architecture according to an embodiment of this application. The parking control system architecture in this application may include a service device 001, an intelligent vehicle 002, and a terminal device 003 in FIG. 5A. The service device 001, the intelligent vehicle 002, and the terminal device 003 may communicate with each other by using a network, so that the service device 001 detects that the intelligent vehicle 002 travels and is parked in a target region.

The service device 001 may be a service apparatus that is installed beside a parking space and that communicates with an on-board unit (OBU, On Board Unit) through dedicated short-range communications (Dedicated Short Range Communication, DSRC), to implement vehicle identity identification, vehicle control, and the like. Alternatively, the service device 001 may be a service device that quickly obtains, processes, analyzes, and extracts data and that brings convenience to a third party for use based on data exchange, for example, a background server, a cloud server, or a roadside unit. In this embodiment of this application, the service device 001 may plan a traveling track of a first vehicle in a target region (a parking lot) based on a current location of the first vehicle and a location of a first parking space; detect whether there is a second vehicle whose distance from the traveling track is less than a first preset distance in the target region; control the second vehicle to travel from a current location to a third location, if there is a second vehicle whose distance from the traveling track is less than the first preset distance in the target region whose distance from the traveling track is greater than the first preset distance; and control the first vehicle to travel to the first parking space based on the traveling track.

Specifically, as shown in FIG. 5A, the service device 001 may include a plan view module 0011, a vehicle guide module 0012, a parking space management module 0013, and a communications module 0014.
(1) The plan view module generates a two-dimensional parking lot plan view based on a panoramic camera disposed around the parking lot, and supports setting or cancellation of a non-parking region on the parking lot plan view.
(2) The vehicle guide module guides a vehicle to a specific location based on coordinates generated by the virtual parking space management module, and directs, based on the panoramic camera, the vehicle to adjust a vehicle body posture, so that the vehicle is accurately parked in a virtual parking space.
(3) The parking space management module delimits an appropriate virtual parking space based on a vehicle model size reported by a vehicle, a predetermined parking time, and the current parking lot plan view, when a travel-out time of the vehicle approaches, re-plans a virtual parking space around the vehicle, arranges the vehicle based on a principle that a shorter predetermined parking time indicates a shorter distance from an entrance/exit, and schedules, based on a new virtual parking space, the vehicle to arrive at the new virtual parking space.
(4) The communications module may establish communication between a parking planning system and a handheld terminal and communication between the parking planning system and a self-driving vehicle based on a communication mode such as 4G/5G or Wi-Fi.

The intelligent vehicle 002 is a vehicle that senses a road environment by using a vehicle-mounted sensing system and that controls, based on a planned traveling route, the vehicle to arrive at a predetermined destination. The intelligent vehicle is integrated with technologies such as a computer, modern sensing, information fusion, communication, artificial intelligence, and automatic control, and is a high-tech complex integrated with functions such as environment sensing, planning and decision-making, and multi-level driver assistance. The intelligent vehicle in this application may be a vehicle that implements self-driving mainly by using an intelligent pilot that is mainly a computer system in the vehicle, an intelligent vehicle that includes a driver assistance system or a fully self-driving system, a wheeled mobile robot, or the like. When the intelligent vehicle 002 is an intelligent vehicle that includes a self-driving system and travels in coverage of the service device 001, an electronic control unit in the intelligent vehicle may receive a control instruction sent by the service device 001, to control the vehicle to travel to a target location. The intelligent vehicle 002 may further feed back various types of data, for example, a traveling speed, a traveling location, and traveling curvature, in a traveling process to the service device 001 by using various sensors.

The terminal device 003 may be a device in which a related application is installed and that provides a local service program to a customer by running the related application. The terminal device 003 in this embodiment of this solution may include but is not limited to any electronic product based on an intelligent operating system, such as a smartphone, a tablet computer, a smart watch, or a personal computer, and may perform man-machine interaction with a user by using an input device such as a keyboard, a virtual keyboard, a touchpad, a touchscreen, and a voice-controlled device, for example, a smartphone, a tablet computer, a smart watch, or a personal computer. The intelligent operating system includes but is not limited to any operating system that enriches functions of a device by providing various mobile applications to the mobile device, for example, Android (Android^{™}), iOS^{™}, and Windows Phone^{™}. For example, in this embodiment of this application, before parking, the terminal device 003 may send a parking request to the service device 001, to reserve a parking service for the intelligent vehicle 002 in the target region. The terminal device 003 may further send a parking request to the service device 001 again during a parking period, to prolong a parking time of the intelligent vehicle 002. The terminal device 003 may further send a pickup request to the service device 001 when the vehicle is about to leave, so that the intelligent vehicle 002 travels in advance to a location near an exit to wait for pickup. In this application, the terminal device 003 is equivalent to a first terminal.

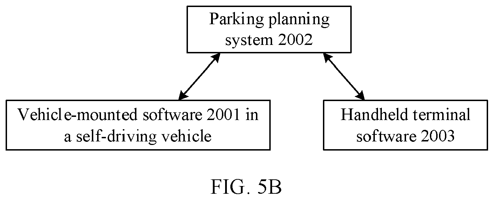

Optionally, based on the schematic diagram of the parking control system architecture shown in FIG. 5A, FIG. 5B is a schematic diagram of a software architecture of a parking control system according to an embodiment of this application. Details are shown in FIG. 5B.

Vehicle-mounted software 2001 in a self-driving vehicle communicates and interacts with a parking planning system in a parking lot, implements a parking space reservation function by reporting information such as a vehicle model and a predetermined parking time of the self-driving vehicle, and is equivalent to the intelligent vehicle 002 shown in FIG. 5A.

The parking planning system 2002 interacts with the vehicle-mounted software and handheld terminal software, plans and manages a virtual parking space in the parking lot, guides a vehicle and a surrounding vehicle when the vehicle arrives or leaves, feeds back virtual parking space information of the vehicle to the handheld terminal software in real time after the vehicle arrives at a virtual parking space, and is equivalent to the service device 001 shown in FIG. 5A.

The handheld terminal software 2003 is configured to interact with the parking planning system, to know information about a virtual parking space in real time and update a predetermined parking time, and is equivalent to the terminal device 003 shown in FIG. 5A.

It may be understood that the parking control system architectures in FIG. 5A and FIG. 5B are merely example parking control implementations in embodiments of this application. A parking control system architecture in embodiments of this application includes but is not limited to the foregoing parking control system architectures.

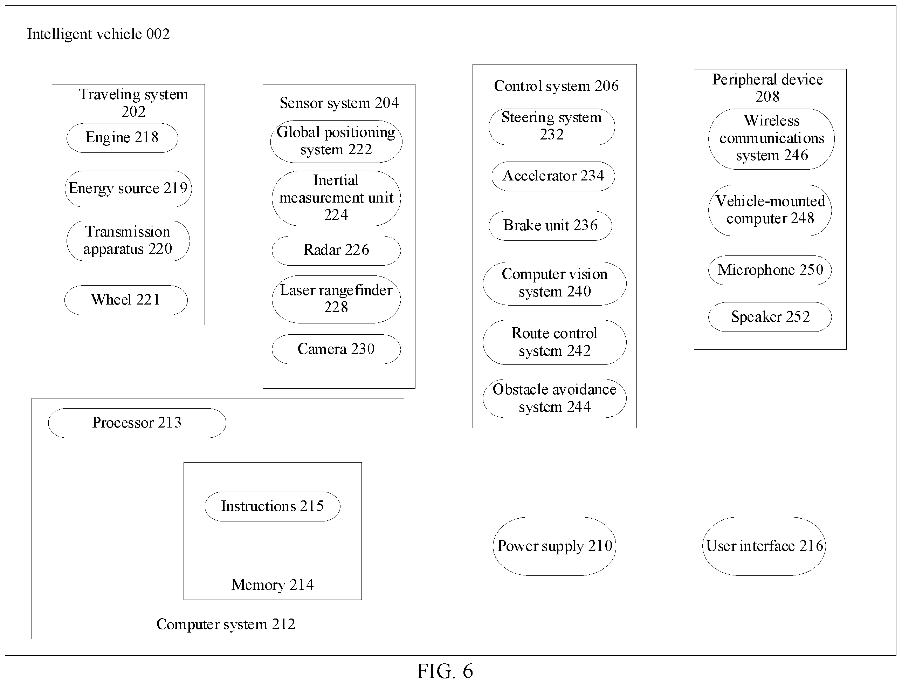

Based on the foregoing vehicle traveling control system architecture, an embodiment of this application provides an intelligent vehicle 002 applied to the vehicle traveling control system architecture. FIG. 6 is a functional block diagram of an intelligent vehicle 002 according to an embodiment of this application.

In an embodiment, a fully or partially self-driving mode may be configured for the intelligent vehicle 002. For example, the intelligent vehicle 002 in the self-driving mode may control the intelligent vehicle 002. A manual operation may be performed to determine current statuses of the vehicle and an ambient environment of the vehicle, determine a possible behavior of at least one another vehicle in the ambient environment, determine a confidence level corresponding to a possibility that the another vehicle performs the possible behavior, and control the intelligent vehicle 002 based on determined information. When the intelligent vehicle 002 is in the self-driving mode, the intelligent vehicle 002 may be set to operate without interacting with a person.

The intelligent vehicle 002 may include various subsystems, for example, a traveling system 202, a sensor system 204, a control system 206, one or more peripheral devices 208, a power supply 210, a computer system 212, and a user interface 216. Optionally, the intelligent vehicle 002 may include more or fewer subsystems, and each subsystem may include a plurality of elements. In addition, all the subsystems and elements of the intelligent vehicle 002 may be interconnected in a wired or wireless manner.

The traveling system 202 may include a component that provides power for the intelligent vehicle 002 to move. In an embodiment, the traveling system 202 may include an engine 218, an energy source 219, a transmission apparatus 220, and a wheel/tire 221. The engine 218 may be an internal combustion engine, a motor, an air compression engine, or a combination of other types of engines, for example, a hybrid engine including a gasoline engine and a motor or a hybrid engine including an internal combustion engine and an air compression engine. The engine 218 converts the energy source 219 into mechanical energy.

Examples of the energy source 219 include gasoline, diesel, other petroleum-based fuel, propane, other compressed gas-based fuel, anhydrous alcohol, a solar panel, a battery, and another power source. The energy source 219 may further provide energy for another system of the intelligent vehicle 002.

The transmission apparatus 220 may transmit mechanical power from the engine 218 to the wheel 221. The transmission apparatus 220 may include a gearbox, a differential, and a drive shaft. In an embodiment, the transmission apparatus 220 may further include another component such as a clutch. The drive shaft may include one or more shafts that may be coupled to one or more wheels 221.

The sensor system 204 may include several sensors for sensing information about an ambient environment of the intelligent vehicle 002. For example, the sensor system 204 may include a positioning system 222 (the positioning system may be a GPS system, a BeiDou system, or another positioning system), an inertial measurement unit (inertial measurement unit, IMU) 224, radar 226, a laser rangefinder 228, and a camera 230. The sensor system 204 may further include sensors (for example, an in-vehicle air quality monitor, a fuel gauge, and an oil temperature gauge) in an internal system of the monitored intelligent vehicle 002. Sensor data from one or more of these sensors may be used to detect an object and a corresponding feature (a location, a shape, a direction, a speed, or the like) of the object. Detection and identification are key functions for a safe operation of the autonomous intelligent vehicle 002.

The positioning system 222 may be configured to estimate a geographical location of the intelligent vehicle 002.

The IMU 224 is configured to sense location and orientation changes of the intelligent vehicle 002 based on inertial acceleration. In an embodiment, the IMU 224 may be a combination of an accelerometer and a gyroscope. For example, the IMU 224 may be configured to measure curvature of the intelligent vehicle 002.

The radar 226 may sense an object in the ambient environment of the intelligent vehicle 002 by using a radio signal. In some embodiments, in addition to sensing the object, the radar 226 may be further configured to sense a speed and/or a traveling direction of the object.

The laser rangefinder 228 may sense, by using a laser, an object in an environment in which the intelligent vehicle 002 is located. In some embodiments, the laser rangefinder 228 may include one or more laser sources, a laser scanner, one or more detectors, and another system component.

The camera 230 may be configured to capture a plurality of images of the ambient environment of the intelligent vehicle 002. The camera 230 may be a static camera or a video camera.

The control system 206 controls operations of the intelligent vehicle 002 and the components of the intelligent vehicle 002. The control system 206 may include various elements, including a steering system 232, an accelerator 234, a brake unit 236, a sensor fusion algorithm 238, a computer vision system 240, a route control system 242, and an obstacle avoidance system 244.

The steering system 232 may operate to adjust a traveling direction of the intelligent vehicle 002. For example, in an embodiment, the steering system 232 may be a steering wheel system.

The accelerator 234 is configured to control an operating speed of the engine 218, so as to control a speed of the intelligent vehicle 002.

The brake unit 236 is configured to control the intelligent vehicle 002 to decelerate. The brake unit 236 may use friction to slow the wheel 221. In another embodiment, the brake unit 236 may convert kinetic energy of the wheel 221 into a current. The brake unit 236 may alternatively slow a rotational speed of the wheel 221 in another manner, so as to control the speed of the intelligent vehicle 002.

The computer vision system 240 may operate to process and analyze an image captured by the camera 230, to recognize an object and/or a feature in the ambient environment of the intelligent vehicle 002. The object and/or the feature may include a traffic signal, a road boundary, and an obstacle. The computer vision system 240 may use an object recognition algorithm, a structure from motion (Structure from Motion, SFM) algorithm, video tracking, and another computer vision technology. In some embodiments, the computer vision system 240 may be configured to: draw a map for an environment, track an object, estimate a speed of the object, and the like.

The route control system 242 is configured to determine a traveling route of the intelligent vehicle 002. In some embodiments, the route control system 242 may determine the traveling route for the intelligent vehicle 002 with reference to data from the sensor 238, the GPS 222, and one or more predetermined maps.

The obstacle avoidance system 244 is configured to recognize, evaluate, and avoid or bypass a potential obstacle in the environment of the intelligent vehicle 002 in another manner.

Certainly, in an instance, the control system 206 may additionally or alternatively include a component other than those shown and described. Alternatively, the control system 206 may delete some of the foregoing components.

The intelligent vehicle 002 interacts with an external sensor, another vehicle, another computer system, or a user through the peripheral device 208. The peripheral device 208 may include a wireless communications system 246, a vehicle-mounted computer 248, a microphone 250, and/or a speaker 252.

In some embodiments, the peripheral device 208 provides a means for a user of the intelligent vehicle 002 to interact with the user interface 216. For example, the vehicle-mounted computer 248 may provide information to the user of the intelligent vehicle 002. The user interface 216 may further operate the vehicle-mounted computer 248 to receive a user input. The vehicle-mounted computer 248 may perform an operation by using a touchscreen. In another case, the peripheral device 208 may provide a means for the intelligent vehicle 002 to communicate with another device located in the vehicle. For example, the microphone 250 may receive audio (for example, a voice command or another audio input) from the user of the intelligent vehicle 002. Similarly, the speaker 252 may output audio to the user of the intelligent vehicle 002.

The wireless communications system 246 may wirelessly communicate with one or more devices directly or through a communications network. For example, the wireless communication system 246 may perform communication through a 3G cellular network such as CDMA, EVD0, or GSM/GPRS, perform communication through a 4G cellular network such as LTE, or perform communication through a 5G cellular network. The wireless communications system 246 may communicate with a wireless local area network (wireless local area network, WLAN) through Wi-Fi. In some embodiments, the wireless communications system 246 may directly communicate with a device through an infrared Link, Bluetooth, or ZigBee. Other wireless protocols, for example, various vehicle communications systems such as the wireless communication system 246, may include one or more dedicated short-range communications (dedicated short range communications, DSRC) devices, and these devices may include public and/or private data communication between vehicles and/or roadside stations.

The power supply 210 may supply power to various components of the intelligent vehicle 002. In an embodiment, the power supply 210 may be a rechargeable lithium-ion or lead-acid battery. One or more battery packs of such a battery may be configured as a power supply to supply power to the various components of the intelligent vehicle 002. In some embodiments, the power supply 210 and the energy source 219 may be implemented together, for example, in some pure electric vehicles.

Some or all functions of the intelligent vehicle 002 are controlled by the computer system 212. The computer system 212 may include at least one processor 213. The processor 213 executes instructions 215 stored in a non-transient computer-readable medium such as a memory 214. The computer system 212 may alternatively be a plurality of computing devices that control individual components or subsystems of the intelligent vehicle 002 in a distributed manner.

The processor 213 may be any conventional processor, for example, a commercially available CPU. Alternatively, the processor may be a dedicated device such as an ASIC or another hardware-based processor. Although FIG. 6 functionally shows the processor, the memory, and other elements of the computer 120 in a same block, persons of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer 120. Therefore, it is understood that a reference to the processor or the computer includes a reference to a set of processors or computers or memories that may or may not operate in parallel. Different from using a single processor to perform the steps described herein, each of some components such as a steering component and a deceleration component may include a respective processor, and the processor performs only calculation related to a component-specific function.

In various aspects described herein, the processor may be located far away from the vehicle and wirelessly communicate with the vehicle. In another aspect, some of the processes described herein are performed by a processor disposed in the vehicle, and the other processes, including a necessary step for performing a single operation, are performed by a remote processor.

In this embodiment of this application, the processor 213 may receive a traveling control instruction and a traveling track of the vehicle, and control, in response to the instruction, the intelligent vehicle 002 to travel to a first parking space based on the traveling track.

In some embodiments, the data storage apparatus 214 may include the instructions 215 (for example, program logic), and the instructions 215 may be executed by the processor 213 to perform various functions, including those functions described above, of the intelligent vehicle 002. The data storage apparatus 224 may further include additional instructions, including an instruction for sending data to, receiving data from, interacting with, and/or controlling one or more of the traveling system 202, the sensor system 204, the control system 206, and the peripheral device 208.

In this embodiment of this application, in addition to the instructions 215, the memory 214 may further store data, for example, the location, the direction, the speed, and other such vehicle data of the vehicle and other information. Such information may be used by the intelligent vehicle 002 and the computer system 212 during operation of the intelligent vehicle 002 in an autonomous mode, a semi-autonomous mode, and/or a manual mode. For example, the current speed and the current curvature of the vehicle may be slightly adjusted based on road information of a target road segment and a received vehicle speed range and vehicle curvature range, so that the speed and the curvature of the intelligent vehicle fall within the vehicle speed range and the vehicle curvature range.

The user interface 216 is configured to provide information to or receive information from the user of the intelligent vehicle 002. Optionally, the user interface 216 may include one or more input/output devices in a set of peripheral devices 208, for example, the wireless communications system 246, the vehicle-mounted computer 248, the microphone 250, and the speaker 252.

The computer system 212 may control a function of the intelligent vehicle 002 based on inputs received from various subsystems (for example, the traveling system 202, the sensor system 204, and the control system 206) and the user interface 216. For example, the computer system 212 may control the steering unit 232 by using an input from the control system 206, to avoid an obstacle detected by the sensor system 204 and the obstacle avoidance system 244. In some embodiments, the computer system 212 may operate to provide control over many aspects of the intelligent vehicle 002 and the subsystems of the intelligent vehicle 002.

Optionally, one or more of the foregoing components may be installed separately from or associated with the intelligent vehicle 002. For example, the data storage apparatus 214 may be partially or completely separated from the intelligent vehicle 002. The foregoing components may be communicatively coupled in a wired manner and/or a wireless manner.

Optionally, the foregoing components are merely examples. In actual application, components in the foregoing modules may be added or deleted based on an actual requirement. FIG. 6 should not be understood as a limitation on this embodiment of this application.

A self-driving vehicle traveling on a road, for example, the foregoing intelligent vehicle 002, may recognize an object in an ambient environment of the self-driving vehicle, to determine an adjustment to a current speed. The object may be another vehicle, a traffic control device, or another type of object. In some examples, each recognized object may be considered independently, and based on features of each object, for example, a current speed and acceleration of the object, and a spacing between the object and the vehicle, may be used to determine a speed to which the self-driving vehicle is to be adjusted.

Optionally, the self-driving intelligent vehicle 002 or a computing device (for example, the computer system 212, the computer vision system 240, or the memory 214 in FIG. 6) associated with the self-driving intelligent vehicle 002 may predict a behavior of the recognized object based on the feature of the recognized object and a status (for example, a static or dynamic object in a parking lot) of the ambient environment. Optionally, all the recognized objects depend on behaviors of each other, and therefore all the recognized objects may be considered together to predict a behavior of a single recognized object. The intelligent vehicle 002 can adjust the speed of the intelligent vehicle 002 based on the predicted behavior of the recognized object. In other words, the self-driving vehicle can determine, based on the predicted behavior of the object, a stable state (for example, acceleration, deceleration, or stop) to which the vehicle needs to be adjusted. In this process, another factor, for example, a lateral location of the intelligent vehicle 002 on a traveling road, curvature of the road, and proximity between static and dynamic objects may be considered to determine the speed of the intelligent vehicle 002.

In addition to an instruction for adjusting the speed of the self-driving vehicle, the computing device may further provide an instruction for modifying a steering angle of the intelligent vehicle 002, so that the self-driving vehicle follows a given track and/or maintains safe lateral and longitudinal distances from an object (for example, a car on an adjacent lane on the road) near the self-driving vehicle.

The intelligent vehicle 002 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

It may be understood that the functional diagram of the intelligent vehicle in FIG. 6 is merely an example implementation in embodiments of this application. An intelligent vehicle in embodiments of this application includes but is not limited to the foregoing structure.

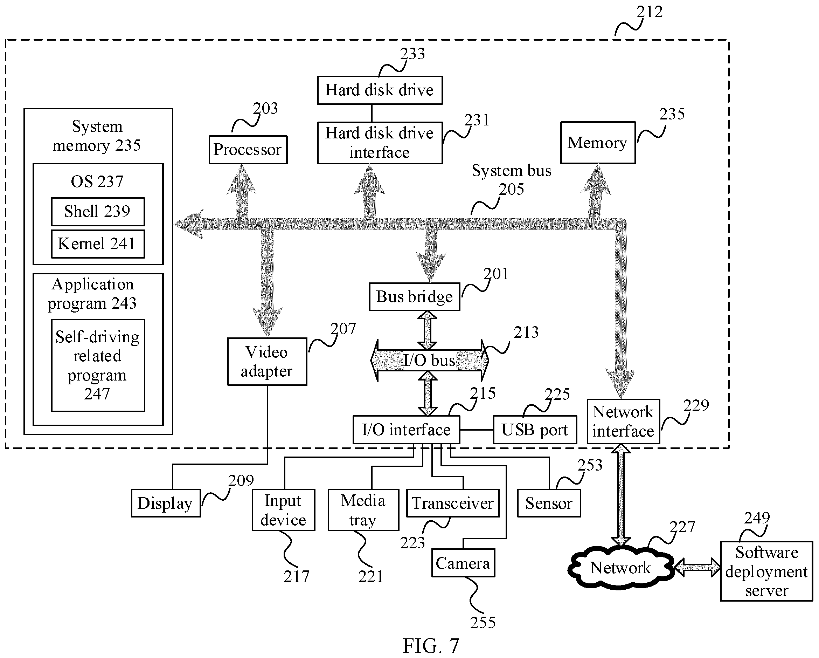

FIG. 7 is a schematic diagram of a structure of a vehicle traveling control apparatus according to an embodiment of this application. The apparatus is applied to FIG. 6, is equivalent to the computer system 212 shown in FIG. 6, and may include a processor 203. The processor 203 is coupled to a system bus 205. The processor 203 may be one or more processors, and each processor may include one or more processor cores. A memory 235 may store related data information, and the memory 235 is coupled to the system bus 205. A video adapter (video adapter) 207 may drive a display 209, and the display 209 is coupled to the system bus 205. The system bus 205 is coupled to an input/output (I/O) bus 213 through a bus bridge 201. An I/O interface 215 is coupled to the I/O bus. The I/O interface 215 communicates with a plurality of I/O devices, for example, an input device 217 (for example, a keyboard, a mouse, and a touchscreen) and a media tray (media tray) 221 (for example, a CD-ROM and a multimedia interface). A transceiver 223 (which may send and/or receive a radio communication signal), a camera 255 (which may capture static and dynamic digital video images), and an external USB port 225 are provided. Optionally, an interface connected to the I/O interface 215 may be a USB port.

The processor 203 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 203 may be a neural network processor or a combination of a neural network processor and the foregoing conventional processor. For example, the processor 203 may calculate appropriate refined track data (namely, a target speed and target curvature) of an intelligent vehicle 002 based on first traveling information and with reference to a condition around the vehicle.

Optionally, in various embodiments described in this application, the computer system 212 may be located far away from the self-driving vehicle, and may wirelessly communicate with the self-driving vehicle. In another aspect, some of the processes described in this embodiment of this application are performed by a processor disposed in the self-driving vehicle, and the other processes, including an action required to perform a single operation, are performed by a remote processor.

The computer system 212 may communicate with a software deployment server (deploying server) 249 through a network interface 229. The network interface 229 is a hardware network interface, for example, a network interface card. A network 227 may be an external network such as the Internet, or may be an internal network such as Ethernet or a virtual private network (VPN). Optionally, the network 227 may alternatively be a wireless network, for example, a Wi-Fi network or a cellular network.

The transceiver 223 (which may send and/or receive a radio communication signal) may use but is not limited to various wireless communication modes such as a 2nd generation mobile network (2th generation mobile networks, 2G), 3G, 4G, and 5G, a DSRC technology, long term evolution-vehicle (Long Term Evolution-Vehicle, LTE-V), or the like. Main functions of the transceiver 223 are to receive information data sent by an external device, and send information data that exists when the vehicle travels on a target road segment to the external device for storage and analysis.

A hard disk drive interface 231 is coupled to the system bus 205. The hard disk drive interface 231 is connected to a hard disk drive 233. A system memory 235 is coupled to the system bus 205. Data running in the system memory 235 may include an operating system OS 237 and an application program 243 of the computer system 212.

The memory 235 is coupled to the system bus 205. For example, in this application, the memory 235 may be configured to store, in a specific format, traveling information of the vehicle traveling on the target road segment.

The operating system includes a shell 239 and a kernel (kernel) 241. The shell 239 is an interface between a user and the kernel (kernel) of the operating system. The shell is an outermost layer of the operating system. The shell manages interaction between the user and the operating system: waiting for an input from the user, interpreting the input from the user to the operating system, and processing various output results of the operating system.

The kernel 241 includes components, in the operating system, that are configured to manage a memory, a file, a peripheral, and a system resource, and directly interacts with hardware. The kernel of the operating system usually runs processes, provides communication between the processes, and provides CPU time slice management, interruption, memory management, I/O management, and the like.

The application program 243 includes a program related to control of self-driving of the vehicle, for example, a program for managing interaction between the self-driving vehicle and an obstacle on a road, a program for controlling a route or a velocity of the self-driving vehicle, or a program for controlling interaction between the self-driving vehicle and another self-driving vehicle on a road. The application program 243 also exists in a system of the software deployment server 249. In an embodiment, the computer system 212 may download the application program 243 from the software deployment server 249 when a self-driving related program 247 needs to be executed. For example, the application program 243 may perform, by using a dynamic model of vehicle engineering such as a bicycle model or an Ackerman model based on information such as a traveling track and a map received or calculated by the processor, conversion into a line control command for controlling the vehicle, that is, convert speed information and curvature information into an opening degree of an accelerator pedal and angular speed information of a steering wheel, to control the vehicle to travel based on the traveling track.

A sensor 253 is associated with the computer system 212. The sensor 253 is configured to detect an ambient environment of the computer system 212. For example, the sensor 253 may detect an animal, a vehicle, an obstacle, and a crosswalk. Further, the sensor may detect an ambient environment of an object such as the animal, the vehicle, the obstacle, and the crosswalk, for example, an ambient environment of the animal, for example, another animal appearing around the animal, a weather condition, and brightness of light in the ambient environment. Optionally, if the computer system 212 is located in the self-driving vehicle, the sensor may be a camera, an infrared sensor, a chemical detector, a microphone, or the like.

It may be understood that the structure of the vehicle traveling control apparatus in FIG. 7 is merely an example implementation in embodiments of this application. A structure of a vehicle traveling control apparatus applied to an intelligent vehicle in embodiments of this application includes but is not limited to the foregoing structure.

Based on the parking control system architecture provided in FIG. 5A and the structure of the parking control device provided in FIG. 6 and with reference to the parking control method and a related application scenario provided in this application, a technical problem provided in this application is analyzed and resolved in detail.

Application scenario: A user arrives at a shopping mall by taking a self-driving vehicle and needs to park the self-driving vehicle in a parking lot of the shopping mall. The parking lot has one floor and only one entrance/exit. Before parking, the user may reserve a parking space in the parking lot, to determine that there is still a spare space in the parking lot for parking.

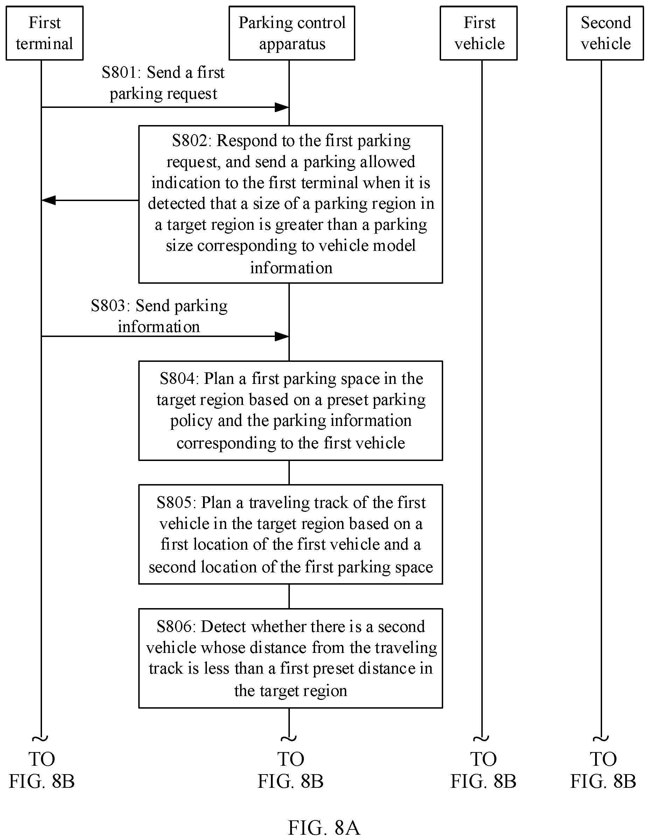

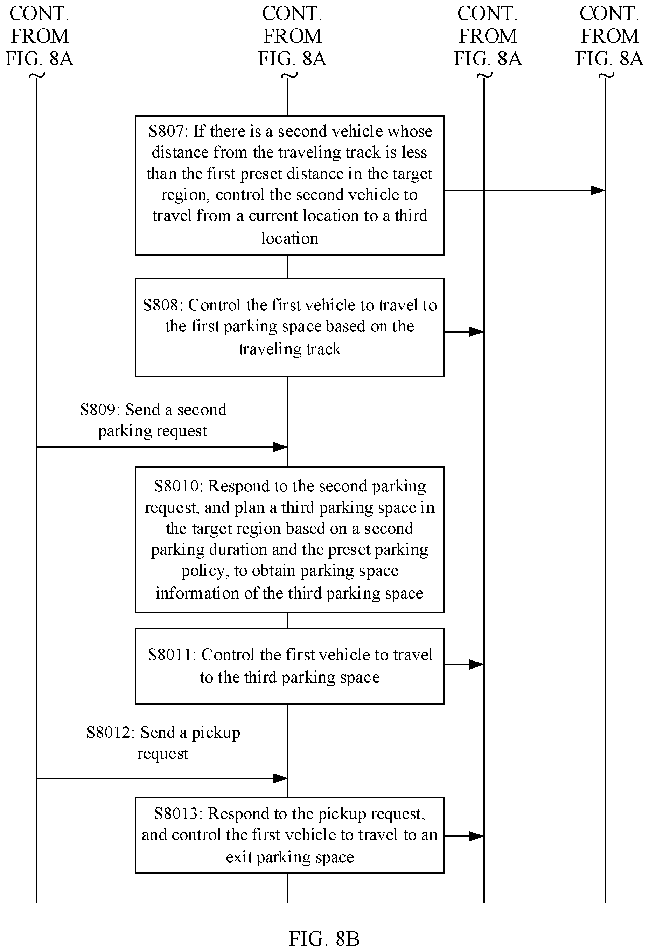

FIG. 8A and FIG. 8B are a schematic flowchart of a parking control method according to an embodiment of this application. The method may be applied to the system architecture shown in FIG. 1. A parking control device 004 may be configured to support and perform steps S801 to S8013 in a method procedure shown in FIG. 8A and FIG. 8B. Interaction between a first terminal (which is equivalent to the terminal device 003 shown in FIG. 5A) and a parking control apparatus (which is equivalent to the service device 001 shown in FIG. 5A) is described below with reference to FIG. 8A and FIG. 8B. The method may include the following steps S801 to S8013.

Step S801: Receive a first parking request sent by the first terminal.

Specifically, the parking control apparatus receives the first parking request sent by the first terminal. The first parking request includes vehicle model information. It may be understood that before a self-driving vehicle (which is equivalent to a first vehicle in this embodiment of this application) is parked, it may be first determined, based on vehicle model information of the vehicle, whether there is a remaining space for parking in a parking lot (a target region). Therefore, the first terminal may send the first parking request to the parking control apparatus.

Step S802: Respond to the first parking request, and send a parking allowed indication to the first terminal when it is detected that a size of a parking region in the target region is greater than a parking size corresponding to the vehicle model information.

Specifically, the parking control apparatus responds to the first parking request sent by the first terminal, and sends the parking allowed indication to the first terminal when it is detected that the size of the parking region in the target region is greater than the parking size corresponding to the vehicle model information, that is, the remaining parking space in the target region can accommodate the first vehicle. The parking allowed indication includes region information of the target region. The region information includes at least one of the following information: location information of the target region, information about at least one entrance in the target region, and information about at least one exit in the target region. When receiving the first parking request sent by the first terminal, the parking control apparatus may determine, based on the vehicle model information of the first vehicle, whether there is a remaining space in the target region for parking the first vehicle. If determining that the first vehicle can be parked, the parking control apparatus may respond to the first parking request, and send the parking allowed indication to the first terminal. It should be further noted that the region information may help the first terminal locate the target region, and select an entrance/exit that facilitates entry and exit of the first vehicle, to improve parking experience.

Optionally, the parking control apparatus responds to the first parking request, and sends a parking forbidden indication to the first terminal when it is detected that the size of the parking region in the target region is less than the parking size corresponding to the vehicle model information. For example, if the parking control apparatus determines that the first vehicle cannot be parked in the target region, the parking control apparatus may respond to the first parking request, and send the parking forbidden indication to the first terminal, to indicate that all parking spaces in the target region are occupied or a remaining region is insufficient to allow the first vehicle to be parked.

Optionally, the target region includes a parking region and a non-parking region, the target region does not include a lane, the non-parking region includes an obstacle region and a vehicle traveling region, and the vehicle traveling region is used for vehicle traveling. In the parking region in the target region, there is only a parking space used for parking, and there is no lane used for vehicle traveling. In addition to the obstacle region, the non-parking region further includes the vehicle traveling region used for vehicle traveling, and there is also no lane in the non-parking region. Therefore, in this embodiment of this application, the parking space can be tiled, and the lane can be canceled, to use a space in the parking lot as much as possible and save a resource occupied by the lane, so that more vehicles can be parked in a specific parking region, to greatly improve space utilization.

Optionally, different non-parking regions may be set in the target region, and dynamic addition or deletion is supported, to dynamically set some non-parking regions in the parking lot. In addition, a parking space does not need to be allocated in advance in a region. When a parking space is reserved for a vehicle, a system delimits a virtual parking space based on factors such as a vehicle model of the vehicle and a predetermined parking time. When the vehicle arrives and a passenger gets off, the system takes over the self-driving vehicle, and guides the vehicle to the specified virtual parking space. When a travel-out time of the self-driving vehicle is about to arrive, the system schedules a self-driving vehicle in a virtual parking space around the vehicle, and arranges the vehicle to a location closest to the entrance/exit. Finally, when the passenger arrives, the self-driving vehicle travels out in a timely manner.

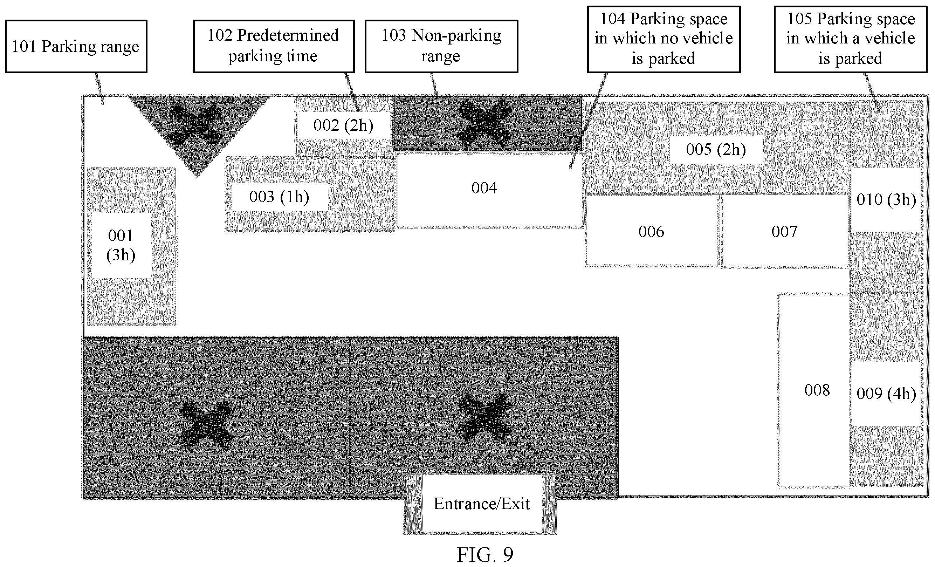

Optionally, after the first parking request sent by the first terminal is received, the method further includes: obtaining the region information of the target region. For example, the parking control apparatus may obtain surrounding information of the target region by using a camera device (for example, a panoramic camera) disposed around the target region, and generate a two-dimensional parking lot plan view corresponding to the target region, to determine the region information of the target region. FIG. 9 is a two-dimensional parking lot plan view according to an embodiment of this application. As shown in FIG. 9, 101 is a range in which a virtual parking space can be delimited in the parking lot; 102 is a virtual parking space in which a vehicle is parked, and 2 h is a predetermined parking time set by a passenger; 103 is a non-parking range, and may be an uneven ground region or a region with an obstacle; 104 is a virtual parking space that is reserved and in which no vehicle is parked; and 105 is a virtual parking space in which a vehicle is parked, and 3 h is a predetermined parking time set by a passenger. Therefore, the region information of the target region may be determined based on the two-dimensional parking lot plan view.

Step S803: Receive parking information sent by the first terminal.

Specifically, the parking control apparatus may receive the parking information sent by the first terminal. The parking information may include one or more of a current location of the first vehicle, a vehicle identifier, a terminal identifier, the vehicle model information, a parking duration, a parking start time, a parking end time, an entrance identifier, and an exit identifier. The current location of the first vehicle may be used to plan a parking path of the vehicle. The vehicle identifier may be used to identify the first vehicle. The terminal identifier may be used to identify the first terminal. The vehicle model information may be used to determine a size of a parking space. The parking duration is an estimated parking duration in the target region, and may be used to determine a location of the parking space. The parking start time and the parking end time may be used to determine the parking duration, to help plan the parking space. The entrance identifier is used to identify an entrance from which the vehicle enters the parking lot. The exit identifier is used to identify an exit from which the vehicle leaves the parking lot.

It may be understood that step S801 and step S803 may be performed together, that is, the first parking request sent by the first terminal may include the parking information. For example, the parking information may be sent together with the parking request to the parking control apparatus.

Step S804: Plan a first parking space in the target region based on a preset parking policy and the parking information corresponding to the first vehicle.

Specifically, the parking control apparatus may plan the first parking space in the target region based on the preset parking policy and the parking information corresponding to the first vehicle, to obtain parking space information of the first parking space. The parking space information includes a second location, and the parking information includes a first location. The first location may be the current location of the first vehicle. The first parking space is a virtual parking space, is customized based on the parking information of the vehicle, and is not a pre-delimited parking space. The preset parking policy may be understood as a parking space planning policy. For example, the preset parking policy may include: (1) A shorter predetermined parking duration indicates a shorter distance from the entrance/exit; (2) An irregular region in the parking lot is preferentially matched for a vehicle model size; (3) No entrance and exit lanes are set, and a virtual parking space is tiled; and (4) A location of a parking space can minimize movement of an original vehicle in the target region when a traveling track is planned. In the four policies, a smaller number indicates a higher priority.

Optionally, the first location may alternatively be a location of an entrance from which the first vehicle enters the target region.

In a possible implementation, the parking information includes a first duration of the first vehicle, and the first duration is an estimated parking duration of the first vehicle in the target region; and the preset parking policy includes that a longer first duration indicates a longer distance between the second location and an exit in the target region. In this embodiment of this application, a self-driving vehicle with a longer parking time is farther away from the exit in the target region, and similarly, a self-driving vehicle with a shorter parking time is closer to the exit in the target region, so that a vehicle with a shorter parking time can quickly travel out of the parking lot.

In a possible implementation, the parking information includes the vehicle model information of the first vehicle; and the preset parking policy includes that a larger vehicle model of the first vehicle indicates a larger region corresponding to the first parking space in the target region. In this embodiment of this application, parking spaces of different sizes are allocated to self-driving vehicles of different vehicle models. Therefore, adaptation to changes of various vehicle sizes can be implemented, and the size of the parking space is not fixed, so that a parking space with a minimum size corresponding to a vehicle model is allocated, to effectively improve parking utilization of a limited space.

Optionally, the parking control apparatus may receive a parking cancellation request sent by the first terminal. The parking cancellation request includes the vehicle identifier. The parking control apparatus responds to the parking cancellation request, and cancels the parking space of the vehicle corresponding to the vehicle identifier.

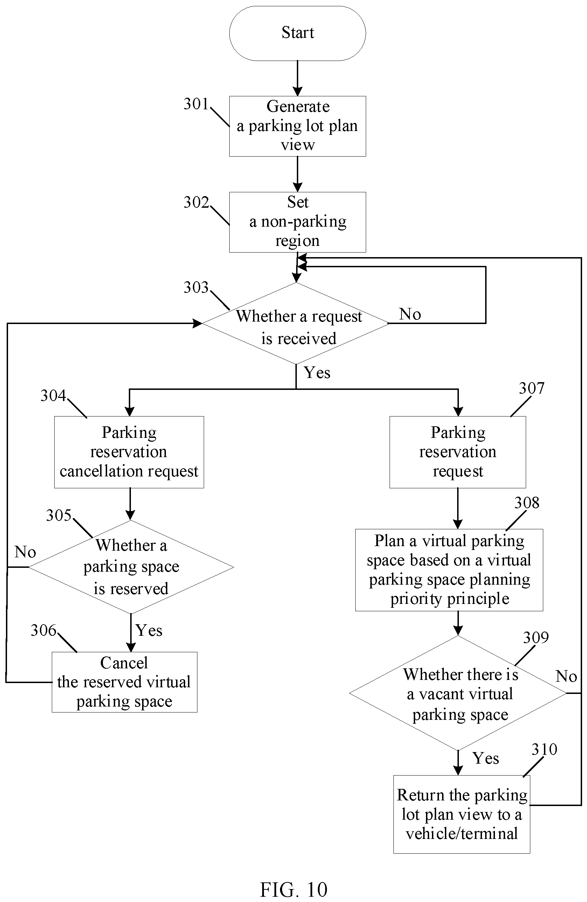

FIG. 10 is a schematic diagram of a procedure of reserving/canceling a virtual parking space from a parking lot when a self-driving vehicle does not arrive at the parking lot according to an embodiment of this application. Details are shown in FIG. 10.

301. The parking control apparatus forms a two-dimensional parking lot plan view based on a surrounding panoramic camera that is disposed.

302. The parking control apparatus may set a non-parking location region (for example, an entrance/exit/a damaged ground region or a vehicle adjustment region) and/or a duration (the non-parking range is automatically canceled after a timeout, or may be set to be permanently valid) in a plan view interface.

303. The parking control apparatus waits for a parking request of the self-driving vehicle, and performs 307 if the received request is a parking reservation request, or performs 304 if the received request is a parking reservation cancellation request.

304. The parking control apparatus processes the parking reservation cancellation request.

305. The parking control apparatus determines whether a virtual parking space is reserved for the self-driving vehicle, and if no virtual parking space is reserved, performs 303 again, and continues to wait for a request, or if a virtual parking space is reserved, performs 306.

306. The parking control apparatus cancels the virtual parking space reserved for the self-driving vehicle, performs 303 again, and continues to wait for a request.

307. The parking control apparatus processes the parking reservation request.

308. The parking control apparatus plans a virtual parking space based on a virtual parking space planning priority principle (which is equivalent to the preset parking policy in this implementation of this application).

309. The parking control apparatus determines whether there is a vacant virtual parking space, and if there is no vacant virtual parking space, performs 303 again, and continues to wait for a request, or if there is a vacant virtual parking space, performs 310.

310. The parking control apparatus returns the parking lot plan view with the reserved virtual parking space to the self-driving vehicle/terminal, performs 303 again, and continues to wait for a request.

In the procedure shown in FIG. 10, based on step 302, a non-parking region range may be freely set for some regions that cannot be used temporarily (for example, a damaged ground region) or some regions that cannot be used for a long time (for example, a region with an obstacle and the entrance/exit), to effectively improve availability of the system. Based on step 308, the virtual parking space in the target region is delimited based on a vehicle model reported by the self-driving vehicle (based on a vehicle model that is equal to or slightly greater than the vehicle model), and during delimitation, the lane line is canceled, and the vehicle is tiled, to maximize utilization of the region.

Step S805: Plan a traveling track of the first vehicle in the target region based on the first location of the first vehicle and the second location of the first parking space.

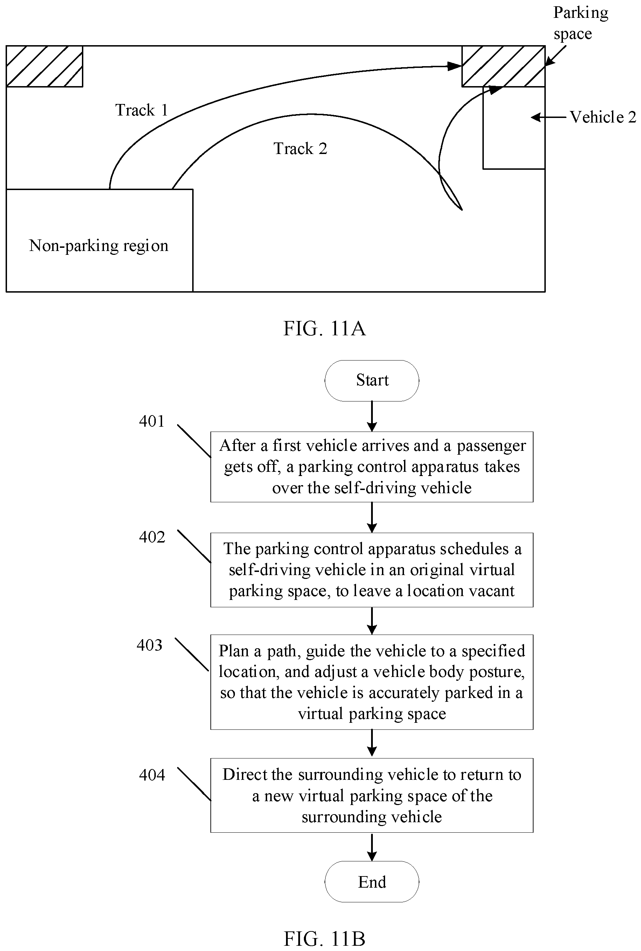

Specifically, the parking control apparatus plans the traveling track of the first vehicle in the target region based on the first location of the first vehicle and the second location of the first parking space. The first location is the current location of the first vehicle, and the second location is a location of the planned parking space. When the traveling track of the first vehicle is planned, a policy of minimizing movement of an original vehicle in the target region may be followed. FIG. 11A is a schematic diagram of a parking lot for planning a traveling track according to an embodiment of this application. As shown in FIG. 11A, a parking space in the target region meets a parking requirement of the first vehicle, and both a track 1 and a track 2 meet a traveling requirement of the first vehicle. A vehicle 2 next to the parking space needs to be scheduled if the first vehicle is parked in the parking space based on the traveling track 2, while no other vehicle needs to be scheduled if the first vehicle is parked in the parking space based on the traveling track 1. Therefore, the traveling track corresponding to the first vehicle is the track 1.

Step S806: Detect whether there is a second vehicle whose distance from the traveling track is less than a first preset distance in the target region.

Specifically, the parking control apparatus may detect whether there is a second vehicle whose distance from the traveling track is less than the first preset distance in the target region. The parking control apparatus determines whether there is a vehicle whose original location needs to be adjusted in the target region, so that the first vehicle is smoothly parked.

Step S807: Control the second vehicle to travel from a current location to a third location, if there is a second vehicle whose distance from the traveling track is less than the first preset distance in the target region.

Specifically, if detecting that there is a second vehicle whose distance from the traveling track is less than the first preset distance in the target region, the parking control apparatus controls the second vehicle to travel from the current location to the third location. A distance between the third location and the traveling track is greater than the first preset distance. FIG. 11B is a schematic diagram of a parking procedure existing after a self-driving vehicle arrives at a parking lot according to an embodiment of this application. Details are shown in FIG. 11B.

401. After the first vehicle arrives and a passenger gets off, the parking control apparatus may take over the self-driving vehicle. In the parking lot, the parking control apparatus is entitled to schedule a vehicle to move.

402. The parking control apparatus schedules a self-driving vehicle in an original virtual parking space, to leave a location vacant for the vehicle to travel.

403. The parking control apparatus plans a path, guides the vehicle to a specified location, and adjusts a vehicle body posture, so that the vehicle is accurately parked in a virtual parking space.

404. The parking control apparatus directs the surrounding vehicle to return to a new virtual parking space of the surrounding vehicle.

Optionally, if there is no second vehicle whose distance from the traveling track is less than the first preset distance in the target region, the first vehicle is controlled to travel to the first parking space based on the traveling track. When detecting that there is no second vehicle whose distance from the traveling track is less than the first preset distance in the target region, the parking control apparatus may directly control the first vehicle to travel to the first parking space based on the traveling track.

Step S808: Control the first vehicle to travel to the first parking space based on the traveling track.

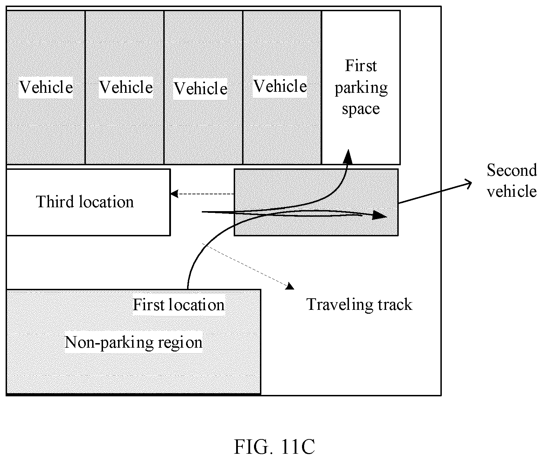

Specifically, the parking control apparatus controls the first vehicle to travel to the first parking space based on the traveling track. After controlling the second vehicle to travel from the current location to the third location, the parking control apparatus may directly control the first vehicle to travel to the first parking space based on the traveling track. FIG. 11C is a schematic diagram of parking a first vehicle according to an embodiment of this application. As shown in FIG. 11C, the target region includes the parking region and the non-parking region, the first parking space is a parking space planned by the parking control apparatus, and the traveling track is a vehicle traveling track between the first location and the second location. However, the current location of the second vehicle occupies a track used for the first vehicle to enter the first parking space. Therefore, to enable the first vehicle to smoothly enter the first parking space, the second vehicle is first adjusted to the third location, and then the first vehicle is controlled to travel to the first parking space based on the traveling track.

Optionally, when the parking control apparatus controls the first vehicle to travel to the first parking space based on the traveling track, the parking control apparatus may send a control instruction to the first vehicle, so that the first vehicle responds to the control instruction, and travels to the first parking space based on the traveling track. The control instruction may include one or more of the traveling track, speed information, and curvature information.

In a possible implementation, the parking information includes the first duration, and the method further includes: after it is detected that the first vehicle stays in the target region for a second duration, controlling the first vehicle to travel to a second parking space closer to the exit, where the second duration is less than the first duration. It may be understood that the second parking space is closer to the exit than the first parking space, which is more convenient for a user to pick up the vehicle. It may be further understood that when the first vehicle is controlled to travel to the second parking space closer to the exit, the first vehicle may not travel out of the first parking space, and may travel out of another location in the target region. This is because the parking space of the first vehicle is not fixed, and the parking space may be dynamically changed based on a parking time. For example, when another vehicle is parked in the target region, the location of the first vehicle may be adjusted. In addition, as a travel-out time of the self-driving vehicle in the parking space in the target region is about to arrive, a location of the parking space may be adjusted based on a predetermined parking time, and the parking space of the self-driving vehicle may be arranged to the second parking space closer to the exit based on the predetermined parking time, so that the self-driving vehicle quickly travels out. Therefore, in this embodiment of this application, a location of the self-driving vehicle may be dynamically adjusted during a parking period of the self-driving vehicle. As the travel-out time increasingly approaches, the location of the self-driving vehicle is closer to the exit, so that the vehicle can quickly travel out.

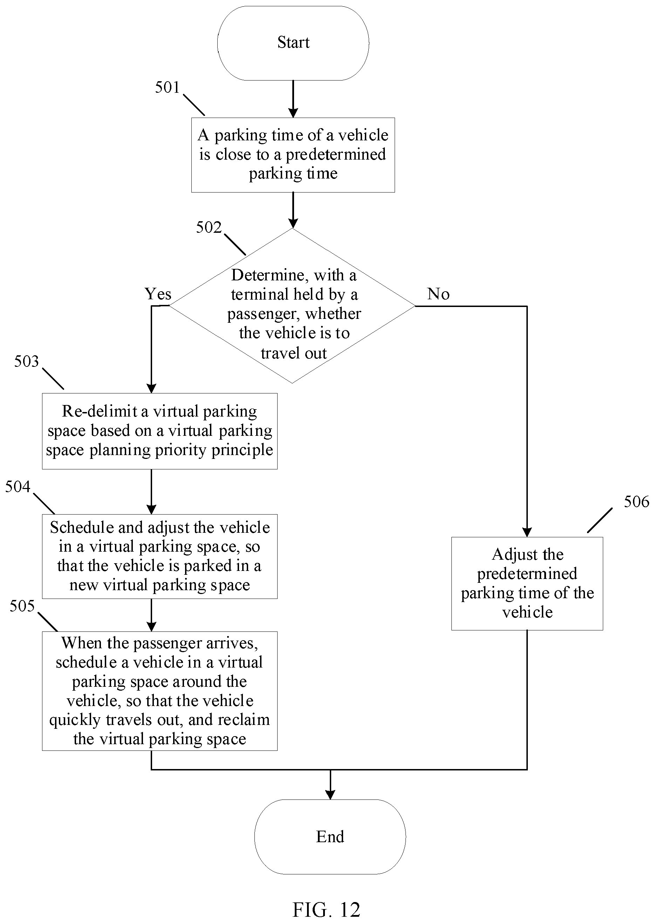

FIG. 12 is a schematic diagram of an adjustment process existing when a predetermined parking time of a self-driving vehicle approaches according to an embodiment of this application. Details are shown in FIG. 12.

501. A parking time of the self-driving vehicle is close to a predetermined parking time (for example, it is 10 minutes away from the predetermined parking time).

502. The parking control apparatus may determine, with a terminal (which is equivalent to the first terminal) held by a passenger, whether the vehicle is to travel out, and performs 506 if the vehicle is not to travel out, that is, there is no response or a travel-out moment does not arrive for the passenger, or performs 503 if the vehicle is to travel out.

503. The parking control apparatus re-delimits a virtual parking space based on a virtual parking space planning priority principle.

504. The parking control apparatus schedules and adjusts the self-driving vehicle in a virtual parking space, so that the self-driving vehicle is parked in a new virtual parking space.

505. When the passenger arrives, schedule a vehicle in a virtual parking space around the self-driving vehicle, so that the vehicle quickly travels out, and reclaim the virtual parking space.

506. Adjust the predetermined parking time of the vehicle (for example, increase the predetermined parking time by 10 minutes).

Based on step 503, the system arranges, based on the parking priority, a vehicle that is closest to a travel-out time to a virtual parking space closest to the entrance/exit, so that when a passenger arrives, the vehicle can travel out as quickly as possible.

Step S809: Receive a second parking request sent by the first terminal.

Specifically, the parking control apparatus receives the second parking request sent by the first terminal. The second parking request may be sent for a plurality of times, to prolong the parking time of the first vehicle.

Step S8010: Respond to the second parking request, and plan a third parking space in the target region based on a second parking duration and the preset parking policy, to obtain parking space information of the third parking space.

Specifically, the parking control apparatus responds to the second parking request, and plans the third parking space in the target region based on the second parking duration and the preset parking policy, to obtain the parking space information of the third parking space. When the user wants to modify the parking time of the first vehicle, the second parking request sent by the first terminal may be received, to prolong the parking time. When the third parking space is planned, correspondingly refer to the foregoing method for planning the first parking space. Details are not described herein.

Step S8011: Control the first vehicle to travel to the third parking space.

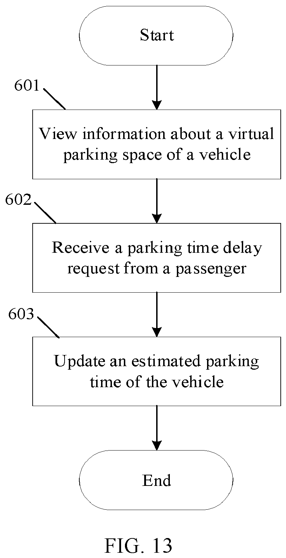

Specifically, the parking control apparatus controls the first vehicle to travel to the third parking space. When the first vehicle is controlled to travel to the third parking space, correspondingly refer to the foregoing method for controlling the first vehicle to travel to the first parking space. Details are not described herein. FIG. 13 is a schematic flowchart of modifying a predetermined parking time of a self-driving vehicle according to an embodiment of this application. Details are shown in FIG. 13.

601. A passenger views information about a virtual parking space of the vehicle (for example, coordinates, a location of the virtual parking space on a parking lot plan view, and the predetermined parking time).

602. The parking control apparatus receives a parking time delay request from the passenger.

603. The parking control apparatus updates the estimated parking time of the self-driving vehicle.

Step S8012: Receive a pickup request sent by the first terminal.

Specifically, the parking control apparatus receives the pickup request sent by the first terminal. The pickup request includes a first exit identifier, the first exit identifier is used to identify a first exit, and the first exit is an exit from which the first vehicle travels out of the target region. When a user wants to pick up a vehicle, the user may send a pickup request to the parking lot, so that the self-driving vehicle can travel in advance to a parking space near the exit to wait for the user to pick up the vehicle. In this way, a time for the user to find the vehicle is greatly shortened, and a problem that it is difficult for the user to find the vehicle is resolved.

Step S8013: Respond to the pickup request, and control the first vehicle to travel to an exit parking space.

Specifically, the parking control apparatus responds to the pickup request, and controls the first vehicle to travel to the exit parking space. A distance between the exit parking space and the first exit is less than a second preset distance. The exit parking space may be a pre-planned parking space in the region, so that the user can conveniently pick up the vehicle.

In implementation of this embodiment of this application, there is a tiled relationship between delimited virtual parking spaces, and a lane line between the virtual parking spaces is canceled. A two-dimensional parking lot plan view is generated by using a surrounding panoramic camera that is disposed. Different non-parking regions may be set on the parking lot plan view, and dynamic addition or deletion is supported, to dynamically set some non-parking regions in the parking lot. In addition, a parking space does not need to be allocated in advance in a region. When a parking space is reserved for a vehicle, a system delimits a virtual parking space based on factors such as a vehicle model of the vehicle and a predetermined parking time. When the vehicle arrives and a passenger gets off, the system takes over the self-driving vehicle, and guides the vehicle to the specified virtual parking space. When a travel-out time of the self-driving vehicle is about to arrive, the system schedules a self-driving vehicle in a virtual parking space around the vehicle, and arranges the vehicle to a location closest to the entrance/exit. Finally, when the passenger arrives, the self-driving vehicle travels out in a timely manner. Therefore, in this method of controlling, during parking, another vehicle to move, parking resources can be fully integrated. In this way, during parking, a case in which the self-driving vehicle cannot be parked in the parking space because the self-driving vehicle cannot pass through a narrow space between vehicles due to an excessively large vehicle model is avoided, or a case in which the self-driving vehicle cannot be parked in the target parking space due to an excessively large vehicle model on either side of the parking space is avoided. Therefore, a success rate of parking the self-driving vehicle in the parking space is greatly increased, and a problem of parking difficulty is resolved. In addition, after the parking space in this application is delimited, the parking space is dynamically changed for a plurality of times based on surrounding information (for example, parking space adjustment of another vehicle and a predetermined parking time). In this way, flexibility of using the parking space in the parking lot is improved, real-time dynamic scheduling of the self-driving vehicle is implemented, and utilization of the parking lot is improved.

The method in embodiments of this application is described above in detail. A related apparatus in embodiments of this application is provided below.

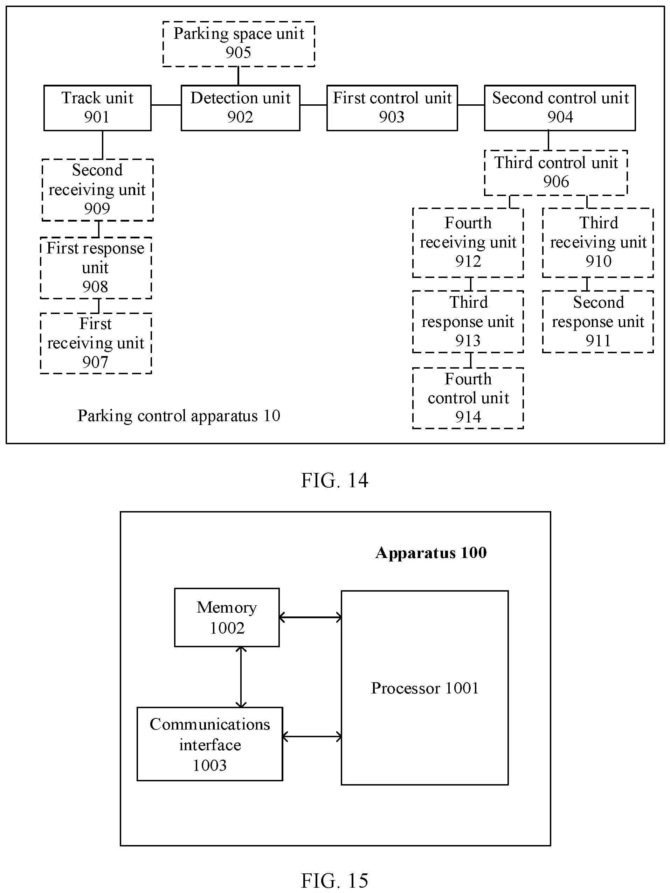

FIG. 14 is a schematic diagram of a structure of a parking control apparatus according to an embodiment of this application. The parking control apparatus 10 is applied to a self-driving vehicle system, may include a track unit 901, a detection unit 902, a first control unit 903, and a second control unit 904, and may further include a parking space unit 905, a third control unit 906, a first receiving unit 907, a first response unit 908, a second receiving unit 909, a third receiving unit 910, a second response unit 911, a fourth receiving unit 912, a third response unit 913, and a fourth control unit 914. Detailed description of the units is as follows:

The track unit 901 is configured to plan a traveling track of a first vehicle in a target region based on a first location of the first vehicle and a second location of a first parking space. The first location is a current location of the first vehicle.

The detection unit 902 is configured to detect whether there is a second vehicle whose distance from the traveling track is less than a first preset distance in the target region.

The first control unit 903 is configured to: control the second vehicle to travel from a current location to a third location, if there is a second vehicle whose distance from the traveling track is less than the first preset distance in the target region. A distance between the third location and the traveling track is greater than the first preset distance.

The second control unit 904 is configured to control the first vehicle to travel to the first parking space based on the traveling track.

In a possible implementation, the target region includes a parking region and a non-parking region, the target region does not include a lane, the non-parking region includes an obstacle region and a vehicle traveling region, and the vehicle traveling region is used for vehicle traveling.

In a possible implementation, the first control unit 903 is further configured to: control the first vehicle to travel to the first parking space based on the traveling track, if there is no second vehicle whose distance from the traveling track is less than the first preset distance in the target region.

In a possible implementation, the apparatus further includes the parking space unit 905, configured to plan the first parking space in the target region based on a preset parking policy and parking information corresponding to the first vehicle, to obtain parking space information of the first parking space, where the parking space information includes the second location, and the parking information includes the first location.

In a possible implementation, the parking information includes a first duration of the first vehicle, and the first duration is an estimated parking duration of the first vehicle in the target region; and the preset parking policy includes that a longer first duration indicates a longer distance between the second location and an exit in the target region.

In a possible implementation, the parking information includes the first duration, and the apparatus further includes the third control unit 906, configured to: after it is detected that the first vehicle stays in the target region for a second duration, control the first vehicle to travel to a second parking space closer to the exit, where the second duration is less than the first duration.

In a possible implementation, the parking information includes the vehicle model information of the first vehicle; and the preset parking policy includes that a larger vehicle model of the first vehicle indicates a larger region corresponding to the first parking space in the target region.

In a possible implementation, the apparatus further includes: the first receiving unit 907, configured to receive a first parking request sent by a first terminal, where the first parking request includes the vehicle model information; the first response unit 908, configured to: respond to the first parking request, and send a parking allowed indication to the first terminal when it is detected that a size of a parking region in the target region is greater than a parking size corresponding to the vehicle model information, where the parking allowed indication includes region information of the target region, and the region information includes at least one of the following information: location information of the target region, information about at least one entrance in the target region, and information about at least one exit in the target region; and the second receiving unit 909, configured to: before the first parking space is planned in the target region based on the preset parking policy and the parking information corresponding to the first vehicle, receive the parking information sent by the first terminal.

In a possible implementation, the apparatus further includes: the third receiving unit 910, configured to receive a pickup request sent by a first terminal, where the pickup request includes a first exit identifier, the first exit identifier is used to identify a first exit, and the first exit is an exit from which the first vehicle travels out of the target region; and the second response unit 911, configured to: respond to the pickup request, and control the first vehicle to travel to an exit parking space, where a distance between the exit parking space and the first exit is less than a second preset distance.

In a possible implementation, the apparatus further includes: the fourth receiving unit 912, configured to receive a second parking request sent by a first terminal, where the second parking request includes a second parking duration; the third response unit 913, configured to: respond to the second parking request, and plan a third parking space in the target region based on the second parking duration and a preset parking policy, to obtain parking space information of the third parking space; and the fourth control unit 914, configured to control the first vehicle to travel to the third parking space.

It should be noted that for functions of the functional units in the parking control apparatus 10 described in this embodiment of this application, refer to the related description of step S801 to step S8013 in the method embodiment in FIG. 8A and FIG. 8B. Details are not described herein.

FIG. 15 is a schematic diagram of a structure of another parking control apparatus according to an embodiment of this application. The parking control apparatus 100 includes at least one processor 1001, at least one memory 1002, and at least one communications interface 1003. In addition, the device may further include a general-purpose component such as an antenna. Details are not described herein.

The processor 1001 may be a general-purpose central processing unit (CPU), a microprocessor, an application-specific integrated circuit (application-specific integrated circuit, ASIC), or one or more integrated circuits configured to control program execution of the foregoing solution.

The communications interface 1003 is configured to communicate with another device or a communications network, for example, the Ethernet, a radio access network (RAN), a core network, or a wireless local area network (Wireless Local Area Network, WLAN).

The memory 1002 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, this is not limited thereto. The memory may exist independently, and is connected to the processor by using a bus. The memory may alternatively be integrated with the processor.

The memory 1002 is configured to store application program code used to execute the foregoing solution, and the processor 1001 controls the execution. The processor 1001 is configured to execute the application program code stored in the memory 1002.

The code stored in the memory 1002 may be used to perform the parking control method provided in FIG. 8A and FIG. 8B, for example, plan a traveling track of a first vehicle in a target region based on a first location of the first vehicle and a second location of a first parking space, where the first location is a current location of the first vehicle; detect whether there is a second vehicle whose distance from the traveling track is less than a first preset distance in the target region; control the second vehicle to travel from a current location to a third location, if there is a second vehicle whose distance from the traveling track is less than the first preset distance in the target region, where a distance between the third location and the traveling track is greater than the first preset distance; and control the first vehicle to travel to the first parking space based on the traveling track.

It should be noted that for functions of the functional units in the parking control apparatus 100 described in this embodiment of this application, refer to the related description of step S801 to step S8013 in the method embodiment in FIG. 8A and FIG. 8B. Details are not described herein.

In the foregoing embodiments, each embodiment is described by focusing on a different aspect. For a part that is not described in detail in an embodiment, refer to the related description in another embodiment.

It should be noted that for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that all of embodiments described in this specification are example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, and may be specifically a processor in the computer device) to perform all or some of the steps of the method described in embodiments of this application. The foregoing storage medium includes any medium that can store program code, for example, a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A parking control method, applied to a self-driving vehicle system, wherein the method comprises:
planning a traveling track of a first vehicle in a target region based on a first location of the first vehicle and a second location of a first parking space, wherein the first location is a current location of the first vehicle;
detecting whether there is a second vehicle whose distance from the traveling track is less than a first preset distance in the target region;
controlling the second vehicle to travel from a current location to a third location, if there is a second vehicle whose distance from the traveling track is less than the first preset distance in the target region, wherein a distance between the third location and the traveling track is greater than the first preset distance; and
controlling the first vehicle to travel to the first parking space based on the traveling track.

2. The method according to claim 1, wherein the target region comprises a parking region and a non-parking region, the target region does not comprise a lane, the non-parking region comprises an obstacle region and a vehicle traveling region, and the vehicle traveling region is used for vehicle traveling.

3. The method according to claim 1, wherein after the detecting whether there is a second vehicle whose distance from the traveling track is less than a first preset distance in the target region, the method further comprises:
controlling the first vehicle to travel to the first parking space based on the traveling track, if there is no second vehicle whose distance from the traveling track is less than the first preset distance in the target region.

4. The method according to claim 1, wherein the method further comprises:
planning the first parking space in the target region based on a preset parking policy and parking information corresponding to the first vehicle, to obtain parking space information of the first parking space, wherein the parking space information comprises the second location, and the parking information comprises the first location.

5. The method according to claim 4, wherein the parking information comprises a first duration of the first vehicle, and the first duration is an estimated parking duration of the first vehicle in the target region; and
the preset parking policy comprises that a longer first duration indicates a longer distance between the second location and an exit in the target region.

6. The method according to claim 5, wherein the parking information comprises the first duration, and the method further comprises:
after it is detected that the first vehicle stays in the target region for a second duration, controlling the first vehicle to travel to a second parking space closer to the exit, wherein the second duration is less than the first duration.

7. The method according to claim 5, wherein the parking information comprises vehicle model information of the first vehicle; and
the preset parking policy comprises that a larger vehicle model of the first vehicle indicates a larger region corresponding to the first parking space in the target region.

8. The method according to claim 7, wherein the method further comprises:
receiving a first parking request sent by a first terminal, wherein the first parking request comprises the vehicle model information; and
responding to the first parking request, and sending a parking allowed indication to the first terminal when it is detected that a size of a parking region in the target region is greater than a parking size corresponding to the vehicle model information, wherein the parking allowed indication comprises region information of the target region, and the region information comprises at least one of the following information: location information of the target region, information about at least one entrance in the target region, and information about at least one exit in the target region; and
before the planning the first parking space in the target region based on a preset parking policy and parking information corresponding to the first vehicle, the method further comprises:
receiving the parking information sent by the first terminal.

9. The method according to claim 1, wherein the method further comprises:
receiving a pickup request sent by a first terminal, wherein the pickup request comprises a first exit identifier, the first exit identifier is used to identify a first exit, and the first exit is an exit from which the first vehicle travels out of the target region; and
responding to the pickup request, and controlling the first vehicle to travel to an exit parking space, wherein a distance between the exit parking space and the first exit is less than a second preset distance.

10. The method according to claim 1, wherein the method further comprises:
receiving a second parking request sent by a first terminal, wherein the second parking request comprises a second parking duration;
responding to the second parking request, and planning a third parking space in the target region based on the second parking duration and a preset parking policy, to obtain parking space information of the third parking space; and
controlling the first vehicle to travel to the third parking space.

11. A parking control apparatus, applied to a self-driving vehicle system, wherein the apparatus comprises:
a track unit, configured to plan a traveling track of a first vehicle in a target region based on a first location of the first vehicle and a second location of a first parking space, wherein the first location is a current location of the first vehicle;
a detection unit, configured to detect whether there is a second vehicle whose distance from the traveling track is less than a first preset distance in the target region;
a first control unit, configured to: control the second vehicle to travel from a current location to a third location, if there is a second vehicle whose distance from the traveling track is less than the first preset distance in the target region, wherein a distance between the third location and the traveling track is greater than the first preset distance; and
a second control unit, configured to control the first vehicle to travel to the first parking space based on the traveling track.

12. The apparatus according to claim 11, wherein the target region comprises a parking region and a non-parking region, the target region does not comprise a lane, the non-parking region comprises an obstacle region and a vehicle traveling region, and the vehicle traveling region is used for vehicle traveling.

13. The apparatus according to claim 11, wherein the first control unit is further configured to:
control the first vehicle to travel to the first parking space based on the traveling track, if there is no second vehicle whose distance from the traveling track is less than the first preset distance in the target region.

14. The apparatus according to claim 11, wherein the apparatus further comprises:
a parking space unit, configured to plan the first parking space in the target region based on a preset parking policy and parking information corresponding to the first vehicle, to obtain parking space information of the first parking space, wherein the parking space information comprises the second location, and the parking information comprises the first location.

15. The apparatus according to claim 14, wherein the parking information comprises a first duration of the first vehicle, and the first duration is an estimated parking duration of the first vehicle in the target region; and
the preset parking policy comprises that a longer first duration indicates a longer distance between the second location and an exit in the target region.

16. The apparatus according to claim 15, wherein the parking information comprises the first duration, and the apparatus further comprises:
a third control unit, configured to: after it is detected that the first vehicle stays in the target region for a second duration, control the first vehicle to travel to a second parking space closer to the exit, wherein the second duration is less than the first duration.

17. The apparatus according to claim 15, wherein the parking information comprises vehicle model information of the first vehicle; and
the preset parking policy comprises that a larger vehicle model of the first vehicle indicates a larger region corresponding to the first parking space in the target region.

18. The apparatus according to claim 17, wherein the apparatus further comprises:
a first receiving unit, configured to receive a first parking request sent by a first terminal, wherein the first parking request comprises the vehicle model information;
a first response unit, configured to: respond to the first parking request, and send a parking allowed indication to the first terminal when it is detected that a size of a parking region in the target region is greater than a parking size corresponding to the vehicle model information, wherein the parking allowed indication comprises region information of the target region, and the region information comprises at least one of the following information: location information of the target region, information about at least one entrance in the target region, and information about at least one exit in the target region; and
a second receiving unit, configured to: before the first parking space is planned in the target region based on the preset parking policy and the parking information corresponding to the first vehicle, receive the parking information sent by the first terminal.

19. The apparatus according to claim 11, wherein the apparatus further comprises:
a third receiving unit, configured to receive a pickup request sent by a first terminal, wherein the pickup request comprises a first exit identifier, the first exit identifier is used to identify a first exit, and the first exit is an exit from which the first vehicle travels out of the target region; and
a second response unit, configured to: respond to the pickup request, and control the first vehicle to travel to an exit parking space, wherein a distance between the exit parking space and the first exit is less than a second preset distance.

20. The apparatus according to claim 11, wherein the apparatus further comprises:
a fourth receiving unit, configured to receive a second parking request sent by a first terminal, wherein the second parking request comprises a second parking duration;
a third response unit, configured to: respond to the second parking request, and plan a third parking space in the target region based on the second parking duration and a preset parking policy, to obtain parking space information of the third parking space; and
a fourth control unit, configured to control the first vehicle to travel to the third parking space.

21. A server, applied to a self-driving vehicle system, and comprising a memory and a processor coupled to the memory, wherein the memory is configured to store instructions, the processor is configured to execute the instructions, and when the processor executes the instructions, the method according to any one of claims 1 to 10 is performed.

22. A computer program, wherein the computer program comprises instructions, and when the computer program is executed by a computer, the computer is enabled to perform the method according to any one of claims 1 to 10.

23. A computer-readable storage medium, wherein the computer-readable storage medium stores a computer program, and when the computer program is executed by a processor, the method according to any one of claims 1 to 10 is implemented.
